# EUROPEAN PATENT APPLICATION

(11) **EP 1 453 121 A1**
(43) Date of publication of application: **01.09.2004**
(21) Application number: 02779971.7
(22) Date of filing: 31.10.2002
(51) Int. Cl.: H01M 2/10, H01R 4/58, H01R 4/70, H01R 13/52

(54) **CIRCUIT COMPONENT CONNECTOR, ITS CONNECTION STRUCTURE, AND GASKET**

(30) Priority: 05.11.2001 JP 2001339537; 12.11.2001 JP 2001346477; 26.11.2001 JP 2001359537; 17.04.2002 JP 2002114910; 09.05.2002 JP 2002134131; 17.05.2002 JP 2002143107; 01.07.2002 JP 2002192484
(71) Applicant: SHIN-ETSU POLYMER CO., LTD., Tokyo 103-0023 (JP)
(72) Inventor: MATSUMOTO, Shuzo, Shiojiri-shi, Nagano 399-0701 (JP)
(74) Representative: Luderschmidt, Schüler & Partner GbR
(86) International application number: PCT/JP2002/011384
(87) International publication number: WO 2003/041192

(57) **Abstract**

A device includes: an elastic holder 10 for accommodating a coin type button battery 2 and a multiple number of connecting terminals 20 arranged in the outer periphery of the bottom of elastic holder 10. The elastic holder 10 is formed of an insulative, approximate cylinder with a base. The plural connecting terminals are integrally formed with the bottom. Each connecting terminal 20 is composed of an insulative elastic rubber 21 formed at the bottom of elastic holder 10 and a multiple number of fine conductive wires 22 arrayed and embedded in elastic rubber 21 with their length oriented in the thickness direction of the bottom of elastic holder 10 so as to be in contact with negative and positive poles 3 and 4 of button battery 2. It is possible to reduce the number of parts, make assembly simple and quick, hence improve assembly performance. For example, even if some vibration or impacts act on the device, there is no fear of the device malfunctioning.

## Description

### Technical Field

The present invention relates to a circuit part connector, its connecting structure and gasket, for use in transmitters of keyless entry systems for automobiles and homes, various electronic circuit devices, audio devices, cellular phones, cameras, watches, electronic calculators and the like.

### Background Art

Conventionally, a typical transmitter of a keyless entry system for locking and unlocking the doors and trunk of an automobile is composed of, through not illustrated, a compact palm-sized case, a circuit board incorporated therein for holding small circuit parts and a button battery for electric supply, removably connected to this circuit board.

The case is composed of upper and lower cases fitting each other with an endless gasket for protection against infiltration of dust, dirt, water and the like, interposed between these upper and lower cases. The upper case incorporates a switch device. This switch device is composed of tact switches and film keys for control that cover the tact switches. For the button battery, a coin type battery is usually used, and is indirectly held in the case by means of a holder or the like and made into contact with multiple metal leaf springs soldered on the circuit board to establish electrical connection.

The conventional keyless entry system transmitter is configured as above. That is, provision of the gasket, holder and others as separate parts makes it impossible to reduce the number of parts and results in low assembly performance, posing a big problem of needing time and labor for assembly. Further, since the circuit parts on the circuit board remain exposed, if, upon switch device operation a gap arises between the upper case and a deformed film key, there is a fear that dust, dirt, water etc., may infiltrate inside, through the gap, damaging and/or short-circuiting the circuit parts.

For the button battery, conventionally, only power supply to the circuit board has been much account of and no consideration has been made for other parts. Therefore, if the keyless entry system transmitter is dropped from a high point in error or from any other reason, there is no way of effectively preventing vibration and impacts from acting on the metallic leaf springs or preventing vibration and impacts from transferring from the button battery to the metallic leaf springs. As a result, electrical connection between the metallic leaf springs and the button battery may turn on and off, thus causing a big problem of the keyless entry system transmitter malfunctioning due to chattering. When, for example, a keyless entry system transmitter is dropped, the closed car trunk can suddenly pop up.

Further, since the circuit board, metallic leaf springs and button battery are placed merely in contact, dust and dirt can easily enter from the outside of the keyless entry system transmitter into and between electrodes, which may cause a short-circuit. Moreover, since electrical connection to the button battery cannot be made without soldering multiple metallic leaf springs and other elements, one by one, to the circuit board, this may result not only in poor assembly performance, but also cause marked delay, troubles and complexity when manufacturing.

### Disclosure of Invention

The present invention has been devised in view of the above, it is therefore an object of the present invention to provide a circuit part connector, its connecting structure and a gasket, which can be assembled with a lower number of parts, simply and quickly with improved assembly performance, which will not malfunction even if a vibration or impact acts thereon, and which can prevent the parts etc., from being damaged due to infiltration of dust, dirt, water and the like.

In order to achieve the above object, the invention includes: an insulative elastic holder in the form of an approximate cylinder with a base for accommodating a circuit part; and a connecting terminal in contact with the electrodes of the circuit part accommodated in the elastic holder.

Here, the connecting terminal may be provided at least at the periphery of the bottom, among the bottom center and bottom periphery of the elastic holder.

Further, the connecting terminal may be composed of an insulative elastic element provided for the elastic holder and a conductive element which is provided for the elastic element and at least put into contact with the electrode of the circuit part.

Also, the elastic element of the connecting terminal may be formed in an approximately rectangular or approximately trapezoidal shape, and the long side of the elastic element may be oriented in the width direction of the bottom of the elastic holder.

Of both the ends of the elastic element, at least the outer end of the elastic element , located on the outer periphery of the bottom of the elastic holder, may be formed in an approximately semi-circular shape.

Also, the conductive element of the connecting terminal may be a fine conductive wire, conductive pin, conductive elastomer, conductive spring, metal foil, or conductive probe that can reciprocate in the direction of the thickness of the bottom of elastic holder.

A gasket flange may be extended from the outer periphery of the elastic holder.

Further, part of the gasket flange may be shaped into a rubber switch.

The rubber switch may be composed of a key top formed on the obverse side of the gasket flange and a conductive contact provided at a projected portion extended from the key top to the underside of the gasket flange.

It is preferred that the structure further includes: a supporter for the elastic holder, which is formed so as to embrace the elastic holder and have a plurality of legs.

In order to achieve the above object, the present invention is characterized in that the electrodes of an electrically joined object and a circuit part are electrically connected by a circuit part connector according to any one of Claims 1 to 6.

In order to achieve the above object, the present invention includes: first and second cases for incorporating an electrically joined object; and a circuit part connector according to Claim 7 or 8, interposed between the first and second cases, and is characterized in that the gasket flange of the circuit part connector is held between the abutment portions of the first and second cases and the electrodes of the electrically joined object and the circuit part are electrically connected by the connecting terminal.

In order to achieve the above object, the present invention includes: first and second cases for incorporating an electrically joined object; and a circuit part connector according to Claim 9, interposed between the first and second cases, and is characterized in that the gasket flange of the circuit part connector is held between the abutment portions of the first and second cases so that the key top of the rubber switch is exposed from the second case so as to allow for a control operation while the conductive contact of the rubber switch and an electrode of the electrically joined object are opposed to each other with a gap so as to be connectable, and the electrodes of the electrically joined object and the circuit part are electrically connected by the connecting terminal.

Further, in order to achieve the above object, the present invention includes: an insulative elastic holder formed in an approximate cylinder with a base; and a gasket flange extended from the outer periphery of the elastic holder.

Also, the peripheral portion of the gasket flange may be held between first and second cases for incorporating an electrically joined object so as to divide the interior space into that for the first case and that for the second case.

Moreover, part of the gasket flange may be adapted to serve as a spacer by making the part thicker than the other part.

The elastic holder within the scope of claims may be formed in a hollowed shape with a base having an approximately convex top section, a cylinder with a base, a tetragonal, hexagonal, octagonal or other prism, a polygonal cylinder, elliptic cylinder or in other shapes as long as the holder is formed in a cylindrical form with a base. The term, 'approximately cylindrical shape with a base' includes both a cylindrical shape with a base and a shape which can be considered to be roughly cylindrical shape with a base. The interpretation of this term is also applied correspondingly to approximate rectangular and approximate trapezoidal shapes. .As the circuit part, at least, a microphone, speaker, button battery and the like may be considered. The button battery in this case may be either that being thin and large in size or that being thick and small in size.

Though the number of the connecting terminals may be one, 2, 3, 4, 5, 6 or other multiple numbers of terminals may be provided as appropriate in the bottom or in the opening of the elastic holder. This connecting terminal can be divided into parts for negative and positive poles. In this case, the terminals for negative and positive poles may have either anisotropic conductivity or not. A singular or plural connecting terminals are integrated at the bottom of the elastic holder, each connecting terminal being able to be formed of an elastic element arranged at the periphery of the bottom face of the elastic holder and a multiple number of conductive elements provided for this elastic element.

Integration of the bottom of the elastic holder and a connecting terminal can be performed by integral forming of the bottom of an elastic holder and a connecting terminal, by forming an elastic holder and a connecting terminal separately, then combining these into one-piece structure, or by another method. The phrase 'approximate center of the bottom of the elastic holder' includes both the center of the bottom of the elastic holder and the proximity of the center of the bottom of the elastic holder.

The elastic element may be a rubber or an elastomer, in addition, its hardness value may be either equal to or not equal to that of the elastic holder. The elastic holder, elastic element and conductive elements may be integrally formed all at once or may be formed sequentially. A rib having a circle, semi-circle, ellipse, rectangle, or other shape in section may be formed as appropriate around the periphery of the gasket flange. A single or multiple number of rubber switches may be formed in part of the gasket flange. A plurality of legs for the supporter are preferably extended either from the bottom side to the opening side of the elastic holder, or vice versa.

Examples of the electrically joined object, at least, include various circuit boards (e.g., printed circuit boards, high-density flexible substrates, etc.) and electric and electronic parts. The circuit part connector and its connecting structure is mainly applied to the transmitters of keyless entry systems for automobiles and homes, but should not be limited to these. For example, they can be applied as appropriate to various electronic circuit devices, audio devices, cellular phones, mobile devices, cameras, watches, electronic calculators and the like. Moreover, the gasket is not limited to application in the fields of electricity, electronics and semiconductors, but can be widely used in the field of machines, the acoustics area, the architectural area, and other areas. This gasket may be used upside down, depending on the mode of usage.

### Brief Description of Drawings

Fig.1 is an overall sectional illustrative view showing the embodiment of a circuit part connector and its connecting structure according to the present invention.
Fig.2 is a perspective illustrative view showing a button battery in the embodiment of a circuit part connector according to the present invention.
Fig.3 is a sectional illustrative view showing an elastic holder and the like in the embodiment of a circuit part connector according to the present invention.
Fig.4 is a bottom view showing the embodiment of a circuit part connector according to the present invention.
Fig.5 is a bottom view showing a connecting terminal in the second embodiment of a circuit part connector according to the present invention.
Fig.6 is a bottom view showing a connecting terminal in the third embodiment of a circuit part connector according to the present invention.
Fig.7 is a sectional illustrative view showing an elastic holder and the like in the fourth embodiment of a circuit part connector according to the present invention.
Fig.8 is a sectional illustrative view showing an elastic holder and the like in the fifth embodiment of a circuit part connector according to the present invention.
Fig.9 is a sectional illustrative view showing an elastic holder and the like in the sixth embodiment of a circuit part connector according to the present invention.
Fig.10 is a partial sectional illustrative view showing a connecting terminal in the seventh embodiment of a circuit part connector according to the present invention.
Fig.11 is a sectional illustrative view showing the eighth embodiment of a circuit part connector and its connecting structure according to the present invention.
Fig.12 is an illustrative view showing a button battery in the eighth embodiment of a circuit part connector according to the present invention.
Fig.13 is a front view showing the eighth embodiment of a circuit part connector according to the present invention.
Fig.14 is a sectional illustrative view of Fig.13.
Fig.15 is a bottom view of Fig.13.
Fig.16 is a sectional illustrative view showing the problem relating to a circuit part connector in the eighth embodiment according to the present invention.
Fig.17 is a sectional illustrative view showing another problem relating to the circuit part connector in the eighth embodiment according to the present invention.
Fig.18 is a perspective view showing a connecting terminal for positive pole in the eighth embodiment of a circuit part connector according to the present invention.
Fig.19 is a perspective view showing another connecting terminal for positive pole in the eighth embodiment of a circuit part connector according to the present invention.
Fig.20 is a perspective view showing another connecting terminal for positive pole in the eighth embodiment of a circuit part connector according to the present invention.
Fig.21 is a perspective view showing another connecting terminal for positive pole in the eighth embodiment of a circuit part connector according to the present invention.
Fig.22 is a perspective view showing another connecting terminal for positive pole in the eighth embodiment of a circuit part connector according to the present invention.
Fig.23 is a bottom view showing another elastic holder in the eighth embodiment of a circuit part connector according to the present invention.
Fig.24 is a sectional view of Fig.23.
Fig.25 is a perspective view showing a connecting terminal for negative pole in the eighth embodiment of a circuit part connector according to the present invention.
Fig.26 is a perspective view showing another connecting terminal for negative pole in the eighth embodiment of a circuit part connector according to the present invention.
Fig.27 is a perspective view showing a connecting terminal for negative pole in the ninth embodiment of a circuit part connector according to the present invention.
Fig.28 is a perspective view showing another connecting terminal for negative pole in the ninth embodiment of a circuit part connector according to the present invention.
Fig.29 is a perspective view showing another connecting terminal for negative pole in the ninth embodiment of a circuit part connector according to the present invention.
Fig.30 is a perspective view showing another connecting terminal for negative pole in the ninth embodiment of a circuit part connector according to the present invention.
Fig.31 is a perspective view showing a connecting terminal for positive pole in the tenth embodiment of a circuit part connector according to the present invention.
Fig.32 is a perspective view showing another connecting terminal for positive pole in the tenth embodiment of a circuit part connector according to the present invention.
Fig.33 is a perspective view showing another connecting terminal for positive pole in the tenth embodiment of a circuit part connector according to the present invention.
Fig.34 is a perspective view showing another connecting terminal for positive pole in the tenth embodiment of a circuit part connector according to the present invention.
Fig.35 is a bottom view showing the eleventh embodiment of a circuit part connector according to the present invention.
Fig.36 is an illustrative view showing a connecting terminal in the eleventh embodiment of a circuit part connector according to the present invention.
Fig.37 is a sectional illustrative view of Fig.36.
Fig.38 is an overall sectional illustrative view showing the twelfth embodiment of a circuit part connector, its connecting structure and gasket according to the present invention.
Fig.39 is a bottom view showing the twelfth embodiment of a circuit part connector, its connecting structure and gasket according to the present invention.
Fig.40 is a sectional illustrative view showing the thirteenth embodiment of a circuit part connector, its connecting structure and gasket according to the present invention.
Fig.41 is a sectional illustrative view showing the fourteenth embodiment of a circuit part connector, its connecting structure and gasket according to the present invention.
Fig.42 is a sectional illustrative view showing the fifteenth embodiment of a circuit part connector, its connecting structure and gasket according to the present invention.
Fig.43 is a sectional illustrative view showing the sixteenth embodiment of a circuit part connector, its connecting structure and gasket according to the present invention.
Fig.44 is a sectional illustrative view showing the sixteenth embodiment of a circuit part connector, its connecting structure and gasket according to the present invention.
Fig.45 is a bottom view of Fig.44.
Fig.46 is a sectional illustrative view showing the seventeenth embodiment of a circuit part connector, its connecting structure and gasket according to the present invention.
Fig.47 is a sectional illustrative view showing the eighteenth embodiment of a circuit part connector, its connecting structure and gasket according to the present invention.
Fig.48 is a sectional illustrative view showing the nineteenth embodiment of a circuit part connector, its connecting structure and gasket according to the present invention.
Fig.49 is a sectional illustrative view showing the nineteenth embodiment of a circuit part connector, its connecting structure and gasket according to the present invention.
Fig.50 is a sectional illustrative view showing the twentieth embodiment of a circuit part connector, its connecting structure and gasket according to the present invention.
Fig.51 is an overall sectional illustrative view showing the twenty-first embodiment of a circuit part gasket and connector and its connecting structure according to the present invention.
Fig.52 is a sectional illustrative view showing the twenty-first embodiment of a circuit part gasket and connector according to the present invention.
Fig.53 is a plan view showing the twenty-first embodiment of a circuit part gasket and connector according to the present invention.
Fig.54 is a bottom view showing the twenty-first embodiment of a circuit part gasket and connector according to the present invention.
Fig.55 is a plan view showing the twenty-second embodiment of a circuit part gasket and connector according to the present invention.
Fig.56 is a plan view showing the twenty-third embodiment of a circuit part gasket and connector according to the present invention.
Fig.57 is a partial front view showing the twenty-fourth embodiment of a circuit part gasket and connector according to the present invention.
Fig.58 is a sectional view of Fig.57.
Fig.59 is a partial sectional view showing the twenty-fifth embodiment of a circuit part gasket and connector according to the present invention.
Fig.60 is a sectional illustrative view showing the twenty-sixth embodiment of a circuit part connector and its connecting structure according to the present invention.
Fig.61 is a partial sectional illustrative view showing the twenty-sixth embodiment of a circuit part connector and its connecting structure according to the present invention.
Fig.62 is a sectional illustrative view showing a circuit part connector before its attachment in the embodiment thereof according to the present invention.
Fig.63 is a perspective illustrative view showing an elastic holder and a supporter in the embodiment of a circuit part connector according to the present invention.
Fig.64 is a sectional illustrative view showing the twenty-seventh embodiment of a circuit part connector and its connecting structure according to the present invention.
Fig.65 is a perspective illustrative view showing a supporter in the twenty-eighth embodiment of a circuit part connector according to the present invention.
Fig.66 is a perspective illustrative view showing a supporter in the twenty-ninth embodiment of a circuit part connector according to the present invention.
Fig.67 is a perspective illustrative view showing a supporter in the thirtieth embodiment of a circuit part connector according to the present invention.
Fig.68 is an illustrative view showing a leg of a supporter in the thirtieth embodiment of a circuit part connector according to the present invention.
Fig.69 is an illustrative view showing a variational example of a supporter in the thirtieth embodiment of a circuit part connector according to the present invention.
Fig.70 is an illustrative view showing a variational example of a supporter in the thirtieth embodiment of a circuit part connector according to the present invention.
Fig.71 is a disassembled view showing the thirtieth embodiment of a circuit part connector according to the present invention.
Fig.72 is a disassembled view showing the thirtieth embodiment of the connecting structure of a circuit part connector according to the present invention, where the circuit part connector is about to be attached to a circuit board.
Fig.73 is a sectional illustrative view showing the thirtieth embodiment of the connecting structure of a circuit part connector according to the present invention, where the circuit part connector has been attached to a circuit board.
Fig.74 is a perspective illustrative view showing the thirtieth embodiment of a circuit part connector according to the present invention.
Fig.75 is a partial sectional illustrative view of Fig.74.
Fig.76 is a disassembled view showing the thirty-second embodiment of a circuit part connector according to the present invention.
Fig.77 is a sectional illustrative view showing the thirty-second embodiment of the connecting structure of a circuit part connector according to the present invention, where the circuit part connector has been attached to a circuit board.
Fig.78 is a partial sectional illustrative view showing the thirty-second embodiment of a circuit part connector according to the present invention.

### Best Mode for Carrying Out the Invention

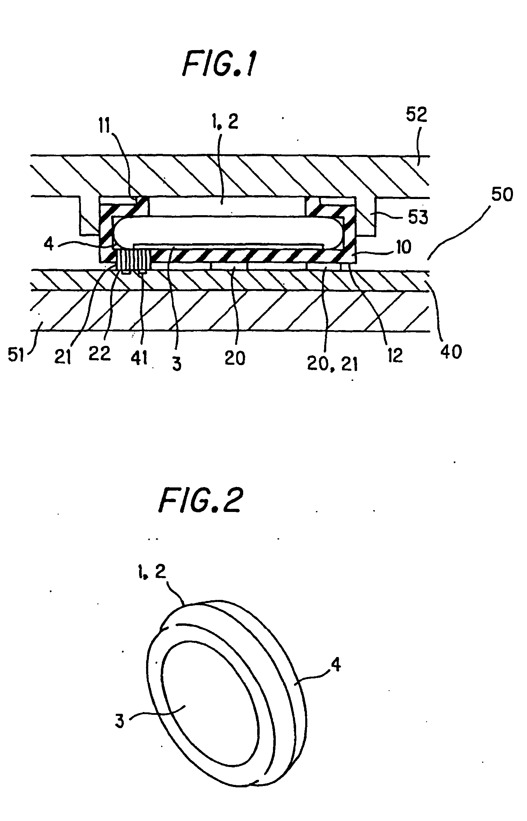

Preferred embodiments of the present invention will hereinbelow be described with reference to the drawings. A circuit part connector and its connecting structure in the present embodiment, as shown in Figs.1 to 4, include: an elastic holder 10 for holding a miniature button battery 2 as a circuit part 1; and separate, plural connecting terminals arranged a predetermined distance apart from each other along the circumference of the outer periphery of the bottom of the elastic holder 10. This elastic holder 10 is formed to be insulative and has an approximate cylindrical shape with a base. The plural connecting terminals 20 are integrally formed with the base.

Button battery 2 may be a coin-type lithium manganese dioxide battery, for example, and formed in a thin disk-like form, as shown in Figs.1 and 2. This button battery 2 has a circular negative pole 3 in the central part of the bottom face, or the obverse side, and a positive pole 4 ranging from the circular outer part of the bottom to the rear face located at the top, including the periphery.

Though in this embodiment the circular outer part of the bottom, the periphery and the top face of button battery 2 form the positive pole 4, the invention should not be limited to this. For example, the central part of the bottom face of button battery 2 may constitute a positive pole 4.

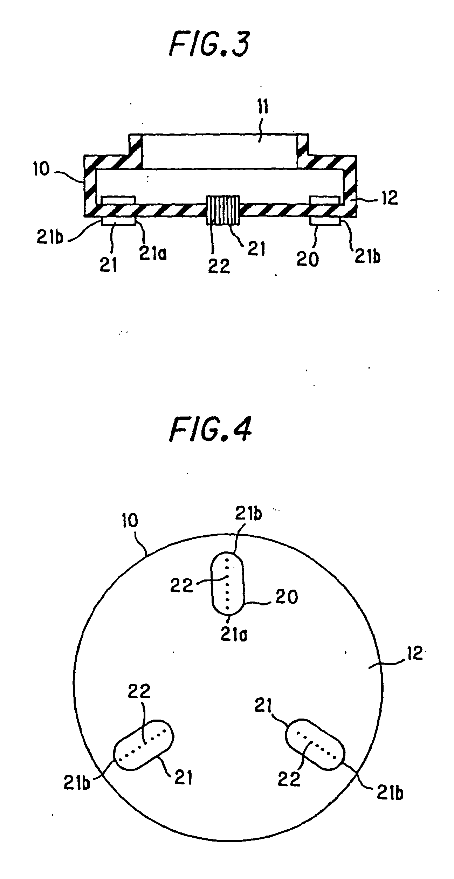

Elastic holder 10, as shown in Figs.1 and 3, is formed in a shape and size corresponding to the button battery 2, using predetermined rubber material. For example, the holder may be formed in a shape having a hollow that has an approximate convex top section and presenting flexibility and cushioning performance. Buttonbattery 2 is fitted in a detachable manner from the opening of an upper small-diametric portion 11 and placed into a lower large-diametric portion 12. As the examples of the predetermined rubber material, butadiene rubber, styrene butadiene rubber, urethane rubber, silicone rubber, etc., can be considered. In particular, silicone rubber or the like which is excellent in temperature dependency and insulative performance is most preferred. The hardness of this elastic holder 10 is set within the range of 10 to 90 degrees Hs, preferably, 20 to 70 degrees Hs, more preferably, 40 to 60 degrees Hs, inviewof cushioning function, formability, handling and the like.

As shown in Figs.1 to 3, each connecting terminal 20 is in an approximate racetrack shape in bottom view and formed of an insulating elastic rubber 21 that is set penetrating through the bottom of elastic holder 10 and integrated therewith with its top and bottom faces projected from the bottom portion of elastic holder 10 and a plurality of fine conductive wires 22 as conductive elements arrayed and embedded in the elastic material, i.e., in elastic rubber 21 with their length oriented along the thickness of the elastic holder 10 bottom or in the vertical direction. Elastic rubber 21 is formed of butadiene rubber, styrene butadiene rubber, urethane rubber, silicone rubber, or the like, due to the requirement for being compressively deformable. In particular, silicone rubber or the like, having low hardness and excellent in temperature dependence and insulation, is the most suitable.

The hardness of elastic rubber 21 is set within the range of 10 to 30 degrees Hs, more preferably about 15 to 25 degrees Hs, in view of the necessary compressibility and flexibility. As shown in Fig.4, this elastic rubber 21 is basically formed to be approximately rectangular in bottom view, with its long side portion (maybe, long side or major axis) extended in the width direction or radial direction of the elastic holder 10 bottom, and the inward end 21a and outward end 21b curved to be approximately semi-circular, in bottom view.

Plural fine conductive wires 22 are arrayed in a row in the center along the longitudinal direction of elastic rubber 21, as shown in Figs.1 and 3, and the upper and lower ends are slightly exposed from the top and bottom surfaces of elastic rubber 21. Each fine conductive wire 22 is formed of a wire or the like having flexibility and flexuosity with its periphery gold plated. This gold plating reduces contact resistance and effectively prevents corrosion at the contact points entailed with changes in environment. These multiple fine conductive wires 22, particularly, their lower ends, come into contact with multiple lands (electrodes) 41 of a circuit board 40 as an electrically joined object while the upper ends contact with negative pole 3 and positive pole 4 of button battery 2, respectively so as to establish electrical connection. Each land 41 of circuit board 40 is also plated with gold for the same reason as stated above.

In the present embodiment, conductive elements made up of fine conductive wires 22 are illustrated but the conductive elements should not be limited to this: conductive pins may be used, for example.

In the above configuration, when electrical connection is to be made between button battery 2 and circuit board 40 that constitute the keyless entry system transmitter, button battery 2 is fitted into large-diametric portion 12 by spreading the opening of small-diametric portion 11 of elastic holder 10 so that negative pole 3 and positive pole 4 come into press contact with multiple fine conductive wires 22 of each connecting terminal 20. In this way, with negative pole 3 and positive pole 4 of button battery 2 abutted against connecting terminals 20, the circuit part connector is fitted into a fitting rib 53 inside an upper case 52 as a part of a case 50 of the keyless entry system transmitter, then connecting terminals 20 of the circuit part connector are pressed against lands 41 of circuit board 40 on a lower case 51 as a part of case 50. Thereafter lower case 51 and upper case 52 are fitted to each other, so as to complete electrical connection between button battery 2 and circuit board 40, whereby the power of button battery 2 can be lead out.

In the above configuration, since elastic holder 10 provides the vibration absorbing, cushioning and damping functions, it is possible to markedly efficiently prevent transfer of vibration and impacts to circuit board 40, connecting terminals 20, button battery 2 and the like even if the keyless entry system transmitter is dropped from a high point. As a result, there is no possibility of the electric circuit of circuit board 40, connecting terminals 20 and button battery 2, turning on and off repeatedly, hence it is possible to solve the malfunction problem of the keyless entry system transmitter due to chattering, in a markedly effective manner. Further, since elastic holder 10 and elastic rubber 21 present the sealing function by their deformation and compression upon connection, there is no risk that dust and dirt from the outside of the keyless entry system transmitter will penetrate into and between electrodes etc., causing short-circuit.

Also, since circuit board 40, fine conductive wires 22 and button battery 2 can be electrically connected without fault, by merely pressing the connecting terminals 20 integrated with elastic holder 10 into contact, no soldering work is needed. As aresult, it is possible to improve assembly performance and make smooth, speed up, simplify and make easy the processing and manufacturing tasks, to a remarkable degree. Further, since elastic rubber 21 is formed in an approximately racetrack shape and arranged with its long side oriented in the radial direction of elastic holder 10, it is possible to correctly put the fine conductive wires 22 into press contact with negative and positive poles 3 and 4 of button battery 2 by specifying the directivity of the elastic rubber.

Moreover, since at least the outward end 21b of elastic rubber 21 is curved in an approximately semicircular shape, elastic rubber 21 can be laid out as outward from the bottom centerof elastic holder 10 and close to the outer circumference as possible, whereby it is possible to properly place fine conductive wires 22 into press contact with negative and positive poles 3 and 4 of button battery 2, respectively. Further, since fine conductive wire 22 itself is easily available, a marked reduction in manufacturing cost can be expected. Besides, since the boundary part between small-diametric portion 11 and large-diametric portion 12 of elastic holder 10 properly positions and presses button battery 2 in a stable manner, each connecting terminal 20 can be correctly pressed against button battery 2 while button battery 2 can be effectively prevented from rattling.

In the above embodiment, a plurality of fine conductive wires 22 that contact with negative and positive poles 3 and 4 of button battery 2 are together arrayed in the longitudinal direction of elastic rubber 21. However, the invention should not be limited to this configuration. For example, a plurality of fine conductive wires 22 that contact with negative pole 3 of button battery 2 may be arrayed in the longitudinal direction of one elastic rubber 21 while a plurality of fine conductive wires 22 that contact with positive pole 4 of button battery 2 may be arrayed in the longitudinal direction of another elastic rubber 21.

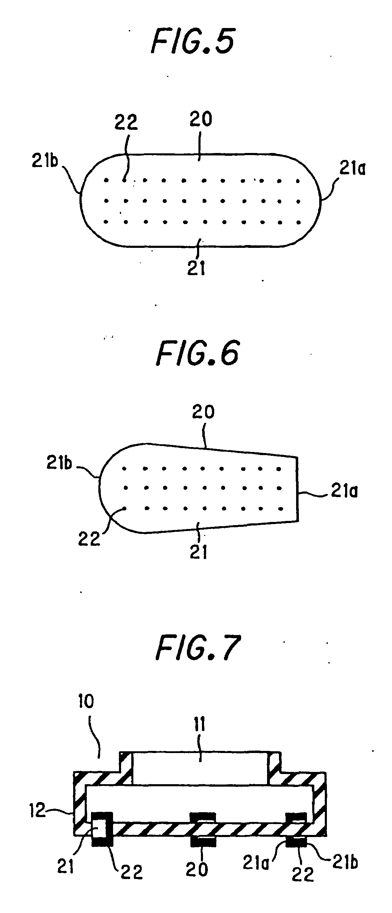

Next, Fig.5 shows the second embodiment of the present invention. In this case, for each connecting terminal 20, instead of a row of plural fine conductive wires 22, plural rows of wires are arrayed and embedded in elastic rubber 21. Other components are the same as the above embodiment so that description is omitted.

Also in this embodiment, the same operation and effect as that in the above embodiment can be expected. Besides, since a greater number of fine conductive wires 22 are employed, it is obvious that a more positive electrical connection can be established.

Next, Fig.6 shows the third embodiment of the present invention. In this case, elastic rubber 21 of each connecting terminal 20 is basically formed in an approximately trapezoidal shape in bottom view, and the inward edge 21a of elastic rubber 21, located close to the bottom center of elastic holder 10 is formed linearly while the wider outward end 21b is curved in a semicircular shape. Other components are the same as the above embodiment so that description is omitted.

Also in this embodiment, the same operation and effect as that in the above embodiment can be expected. Besides, since it is not necessary to form the inward end 21a of elastic rubber 21 in a curve, it is obvious that the processing and .manufacturing can be made more simple.

Next, Fig.7 shows the fourth embodiment of the present invention. In this case, each elastic rubber 21 is formed having a rectangular or approximately semi-racetrack shaped section, and a plurality of fine conductive wires 22 in a rounded U-shape or squared U-shape are arrayed and bonded at intervals of a predetermined distance on part of the surface of the rubber. Other components are the same as the above embodiment so that description is omitted.

Also in this embodiment, the same operation and effect as that in the above embodiment can be expected. Besides, since plural fine conductive wires 22 are exposed from elastic rubber 21, it is obvious that the condition of fine conductive wires 22 can be checked externally.

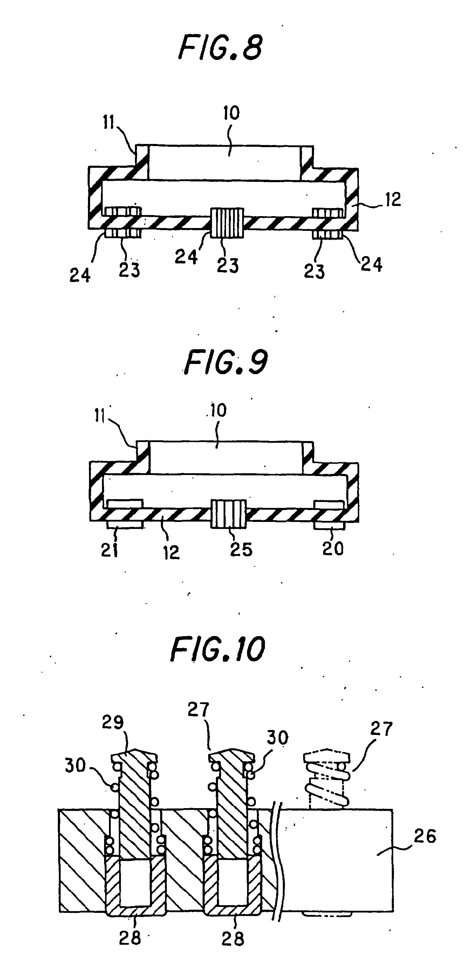

Next, Fig.8 shows the fifth embodiment of the present invention. In this case, each connecting terminal 20 is formed by juxtaposing a conductive elastomer 23 as a conductive element and an insulative elastomer 24 as an elastic element, in layers, alternately in the width direction. Other components are the same as the above embodiment so that description is omitted.

Also in this embodiment, the same operation and effect as that in the above embodiment can be expected, and a more simplified structure compared to the case of using plural fine conductive wires 22 can be expected.

Next, Fig.9 shows the sixth embodiment of the present invention. In this case, in each elastic rubber 21, a plurality of conductive leaf springs (conductive springs) 25 as conductive elements are juxtaposed at intervals of a predetermined distance. The flexible conductive leaf springs 25 may have an approximately linear, I-shaped section or V-shaped section. Other components are the same as the above embodiment so that description is omitted.

Also in this embodiment, the same operation and effect as that in the above embodiment can be expected. Besides, since conductive leaf springs 25 which are cheap and easily available are used, it is possible to expect a significant cost reduction.

Next, Fig.10 shows the seventh embodiment of the present invention. In this case, the elastic element is composed of a housing 26 of insulative multi-purpose engineering plastic, and a plurality of miniature conductive probes 27 that can reciprocate in the direction of the bottom thickness of elastic holder 10 are arrayed in the housing 26 at intervals of a predetermined distance.

Each conductive probe 27 as a conductive element is constructed of a conductive toe-pin 28 having an approximately U-shaped section, fitted and fixed in a bore of housing 26, a conductive pin 29 which is inserted in the cap-shaped conductive toe-pin 28 from its top opening and supported therein so as to be slidable and a conductive coil spring 30 which is interposed between these conductive toe-pin 28 and conductive pin 29 and urges conductive pin 29 against button battery 2. As to conductive toe-pin 28, it may be fitted and fixed in housing 26 or may be slidably inserted. Other components are the same as the above embodiment so that description is omitted.

Also in this embodiment, the same operation and effect as that in the above embodiment can be expected. Besides, use of coil springs 30 that vertically contract with a stable posture makes it possible to reduce the height of the connector (to about 1.5 mm to 1.75 mm, for example) without difficulties, whereby large reduction in resistance and connection load can be expected. Use of this technique makes it possible to meet recent demands for development of cellular phones into a thin, light-weight and/or compact configuration.

The above embodiments can be used in combination as appropriate. For example, the sixth and seventh embodiments can be used in combination.

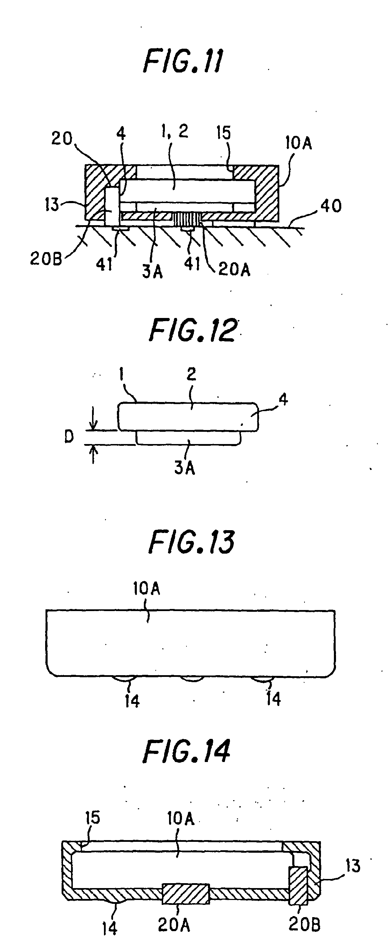

Next, Figs.11 to 15 show the eighth embodiment of the present invention. This configuration includes: an elastic holder 10A accommodating a button battery 2 as a circuit part 1. For the connecting terminal 20 of this elastic holder 10A, anegative pole connecting terminal 20A that is put intocontact with the negative pole 3A projected from button battery 2 .and a positive pole connecting terminal 20B that is put into contact with the positive pole 4 that covers the surface of the button battery except negative pole 3A are provided.

As shown in Fig.12, button battery 2 is configured so that a circular part as the negative pole 3A is projected in the center from the bottom surface as the obverse face while positive pole 4 is formed ranging from the circular outer part of the bottom to the rear face located at the top, including the periphery. There is a step D between the negative pole 3A and positive pole 4. The size of this step D depends on the type of button battery 2: some are 0.15 mm or others are 1 mm or greater, for example.

Button battery 2 may have such a configuration that a circular positive pole 4 is projected in the center from the bottom surface while a negative pole 3A is formed ranging from the circular outer part of the bottom to the rear face located at the top, including the periphery.

Elastic holder 10A, as shown in Figs.11 and 13 to 15, is formed in a shape and size corresponding to the button battery 2, using predetermined elastomer. For example, the holder is basically formed in an approximate cylindrical form with a base presenting flexibility and cushioning performance while a small rectangular portion 13 is integrally formed in part of the peripheral wall. This holder snugly holds button battery 2 in a detachable manner. This elastic holder 10A has a plurality of circular projections 14, in bottom view, arranged circularly on the bottom surface a predetermined distance apart from each other. Further, a flange 15 is formed so as to horizontally project radially inwards from the inner rim of the opening and brace the top face of button battery 2. Projections 14 provide the function of efficiently preventing the inserted button battery 2 from inclining and compressing connecting terminals 20 eccentrically.

It is also possible to configure the elastic holder 10A in a shape having a hollow that has an approximate convex top section, in the same manner as the forgoing embodiment.

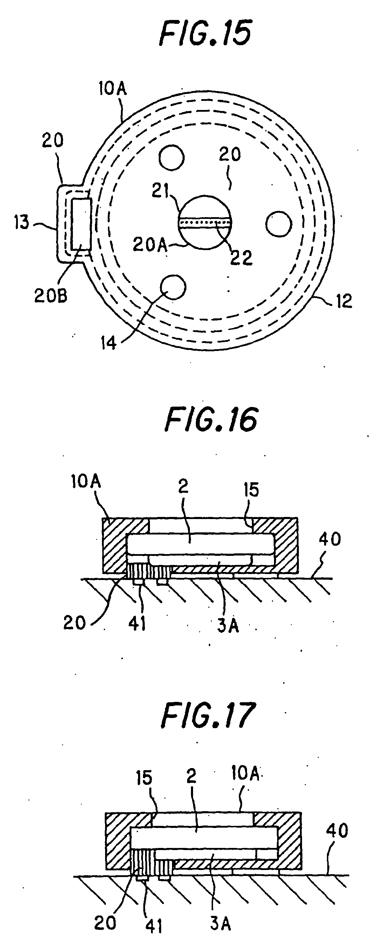

As shown in Figs.11 and 15, negative pole connecting terminal 20A is shaped in an approximately circular form in bottom view and is composed of a disk-like insulative elastic rubber 21 that is formed integrally with elastic holder 10A, penetrating through the center of the bottom thereof with its top and bottom faces projected from the bottom portion of elastic holder 10A; and a plurality of fine conducive wires 22 arrayed and embedded along the diameter with their length oriented in the thickness direction of the elastic holder 10A bottom or in the vertical direction. These fine conductive wires 22 may be provided in multiple rows or in a single row, in elastic rubber 21.

As shown in Figs.11, 15 and 18, positive pole connecting terminal 20B is shaped in an approximately rectangular form in bottom view and is composed of a prism-shaped insulative elastic rubber 21 that is formed integrally with a rectangular portion 13 of elastic holder 10A, penetrating through the peripheral part of the bottom thereof with its top and bottom portions projected from the bottom portion of elastic holder 10A, and a plurality of fine conducive wires 22 arrayed along the inner face of the elastic element, i.e., the elastic rubber 21, which opposes button battery 2, with their length oriented in the thickness direction of the elastic holder 10A bottom or in the vertical direction. Other components are the same as the above embodiment so that description is omitted.

Also in this embodiment, the same operation and effect as that in the above embodiment can be expected. Also, it is obvious that this method entails no increase in compression load and connection failures due to offset compression can be reduced.

In detail, when one-piece connecting terminal 20 is used with a button battery 2 having a large step D, the step D cannot be absorbed andmay cause failure to complete electrical connection to positive pole 4, as shown in Fig.16. To deal with this, if connecting terminal 20 is made thicker in order to make sure to absorb the step D of button battery 2, the portion which negative pole 3A abuts should be compressed more than needed as shown in Fig.17: this results in increase in load.

Since the connecting terminal 20 in the present embodiment is separated into negative pole connecting terminal 20A and positive pole connecting terminal 20B instead of using the one-piece connecting terminal 20, the positive pole connecting terminal 20B, which should be compressed at a higher ratio, is adapted such that the terminal comes into contact with positive pole 4 at the periphery of the button battery, from the lateral side. Therefore , it is no longer necessary to absorb the step D of button battery 2 as needed in the case where connecting terminal 20 is given in one-piece structure. Accordingly, no increase in compression load takes place, hence it is possible to markedly and effectively prevent connection failures entailed with offset compression.

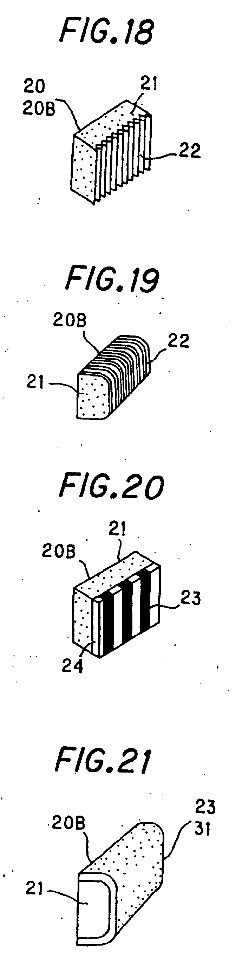

In the above embodiment, multiple fine conductive wires 22 are arrayed on the inner surface of elastic rubber 21 so as to form the positive pole connecting terminal 20B shown in Fig.18, but the structure should not be limited to this. For example, as shown in Fig.19, an elastic rubber 21 may be shaped having an approximately semi-racetrack-shaped section and a plurality of fine conductive wires 22 in a U-shape are bonded at intervals of a predetermined distance on part of the surface of the rubber, so as to form a positive pole connecting terminal 20B comparable to Fig. 7. Alternatively. a conductive elastomer 23 and an insulative elastomer 24 may .be laterally juxtaposed in an alternate manner on one upright face of an elastic rubber 21, thus forming a positive pole connecting terminal 20B (see Fig.20).

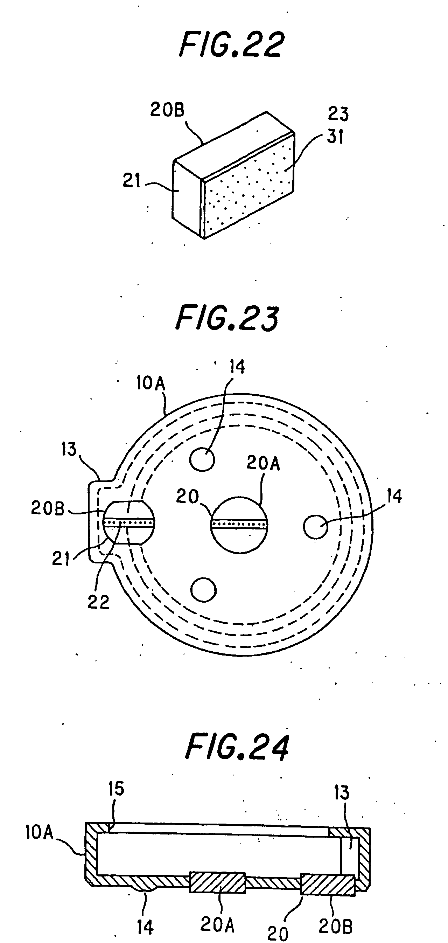

Also, an elastic rubber 21 may be shaped having an approximately semi-racetrack-shaped section and a sheet-like conductive elastomer 23 or a piece of metal foil 31 may be applied in U-shape onto the surface, thus forming a positive pole connecting terminal 20B (see Fig.21). Further, an elastic rubber 21 may be shaped into a block form or an approximate plate-like form in section and a conductive elastomer 23 having a plate-like section or a piece of metal foil 31 may be bonded onto one upright face of the elastic rubber, thus forming a positive pole connecting terminal 20B (see Fig.22). Moreover, as shown in Figs.23 and 24 positive pole connecting terminal 20B may be composed of an approximately racetrack-shaped insulative elastic rubber 21 that is formed integrally with a rectangular portion 13 of elastic holder 10A, penetrating nearby with its top and bottom portions projected from the bottom portion of elastic holder 10A, and a plurality of fine conducive wires 22 arrayed and embedded in the longitudinal direction of the elastic element, i.e., the elastic rubber 21, with their length extended in the thickness direction of the elastic holder 10A bottom or in the vertical direction.

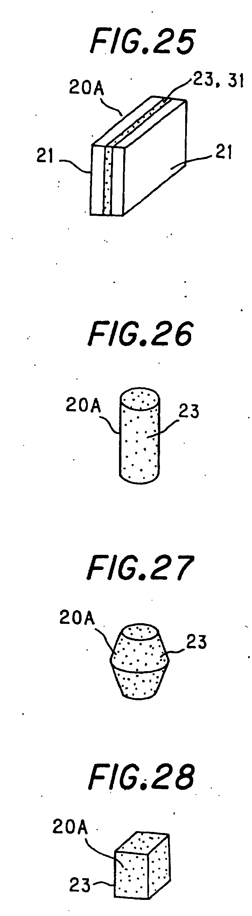

In addition, negative pole connecting terminal 20A may be laminated and bonded by sandwiching a sheet-like conductive elastomer 23 or a sheet of metal foil 31 between a pair of elastic rubber 21 pieces having a plate-like section (see Fig.25). Also, negative pole connecting terminal 20A may be formed of a cylindrical conducive elastomer 23 only (see Fig.26). Moreover, the sixth or seventh embodiment may be used as the negative pole connecting terminal 20A and positive pole connecting terminal 20B.

Next, Fig.27 shows the ninth embodiment of the present invention. In this case, a conductive elastomer 23 that is a conductive composition of conductive particles blended with an insulative elastomer 24, is used and formed into a shape having an approximately hexagonal section, forming a negative pole connecting terminal 20A.

As the insulative elastomer 24, various elastomers (the generic term for materials having elastic properties of rubber at normal temperatures) which have fluidity before curing and form cross-links after curing are preferred. Specific examples include silicone rubber, fluororubber, polyurethane rubber, polybutadiene rubber, poly-isopropylene rubber, chloroprene rubber, polyester rubber, styrene-butadiene copolymer rubber and natural rubber. Foamed materials of these, either closed-cell foam or continuous cell foam can also be used. Among these, silicone rubber which is excellent in electric insulation, heat resistance, compression set, workability and other factors is the most suitable.

For the conductive particles, granular or flaked particles of which at least the surface is covered with metal can be used. Specific examples include granular or flaked particles made up of pure metal such as gold, sliver, copper, platinum, palladium, nickel, aluminum or the like, or metal alloy of these. Further, use can be made of metallized particles, formed by metal plating, depositing, sputtering or other methods, having a core of thermosetting resins such as phenol resin, epoxy resin, silicone resin, urethane resin and the like, baked products of these, or inorganic material such as ceramic, silica or the like.

These kinds of conductive particles can be used singularly or blended in combination. Other components are the same as the above embodiment, so that description is omitted.

Also in this embodiment it is obvious that the same operation and effect as the above embodiment can be expected.

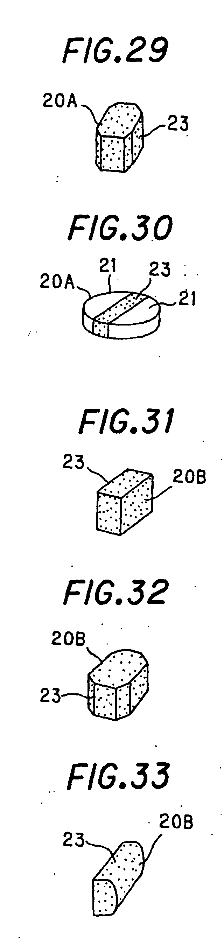

The elastic negative pole connecting terminal 20A in the ninth embodiment may be formed as a rectangular block shown in Fig.28, or may be formed as a block that is approximately polygonal in plan view, as shown in Fig.29. Also, as shown in Fig.30, negative pole connecting terminal 20A may be an overall disk-like form, by integrally supporting the terminal that is approximately rectangular in plan view, between a pair of elastic rubber pieces 21 that are approximately semi-circular in plane view.

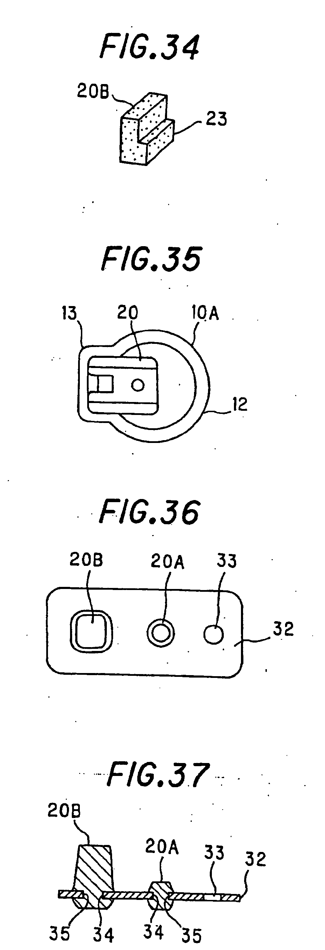

Next, Figs.31 to 34 show the tenth embodiment of the present invention. In this case, to form an elastic positive pole connecting terminal 20B, a conductive elastomer 23 that is a conductive composition of conductive particles blended with an insulative elastomer 24, is used and formed into a shape having an approximately rectangular block (see Fig.31), a block that is approximately polygonal in plan view (see Fig.32), a block having an approximately semi-racetrack-shaped section (see Fig.33) or a block having an approximately L-shaped section (see Fig.34). Other components are the same as the above embodiment so that description is omitted.

Also in this embodiment it is obvious that the same operation and effect as the above embodiment can be expected.

Next, Figs.35 to 37 show the eleventh embodiment of the present invention. In this case, a connecting terminal 20 of an elastic holder 10A accommodating a miniature button battery 2 is constructed of an insulative substrate 32 that is approximate rectangular in plan view, arranged at the bottom of elastic holder 10A, a short negative pole connecting terminal 20A, arranged and supported upright at about the center of the insulative substrate 32 so as to be in contact with negative pole 3A that is projected from button battery 2 and a long and large positive pole connecting terminal 20B, arranged and supported upright at one side of insulative substrate 32 so as to be in contact with positive pole 4 that covers the surface of the button battery except negative pole 3A.

For the material of insulative substrate 32, glass epoxy, publicly known engineering plastics such as PET, PEN, PEI, PPS, PEEK, liquid crystal polymers, polyimide etc., may be used. Among these, polyimide which has a low coefficient of thermal expansion and is excellent in heat resistance, is most preferred. This insulative substrate 32 may be bonded to the bottom of elastic holder 10A or may be integrally formed with the bottom of elastic holder 10A by boring a through-hole 33 to provide an interlock structure.

With regards to negative pole connecting terminal 20A and positive pole connecting terminal 20B, suitable configurations may be adopted as appropriate from the above eighth, ninth, tenth embodiments and others, and these terminals are arrayed in line abreast, a predetermined distance apart, as shown in Figs.36 and 37. Each of these both negative pole connecting terminal 20A and positive pole connecting terminal 20B having elasticity is formed in a column-like shape with an endless anti-fall groove 34 on the peripheral side thereof. This anti-fall groove 34 fits into and is engaged with the rim of through-hole 35 formed in insulative substrate 32, to establish firm support. Other components are the same as the above embodiments, so that description is omitted.

Also in this embodiment, the same operation and effect as that in the above embodiments can be expected. Besides, design flexibility can be markedly improved.

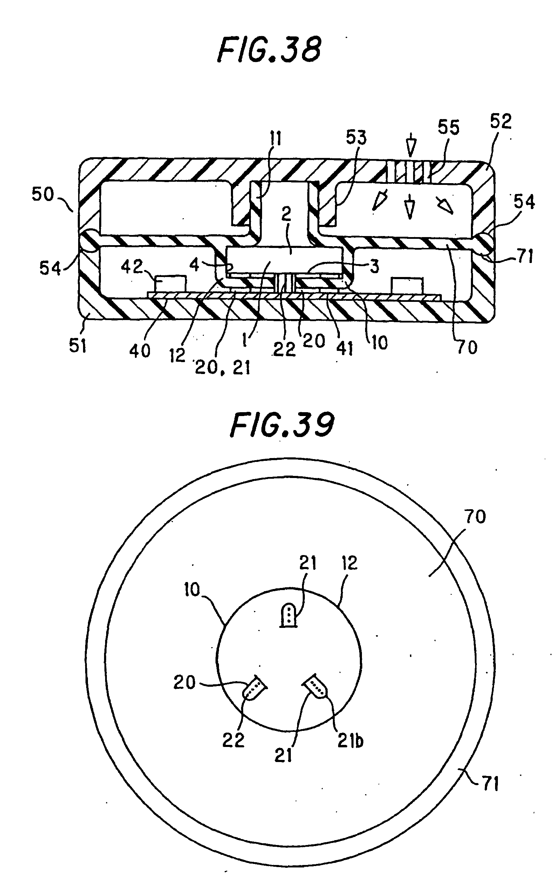

Next, Figs.38 and 39 show the twelfth embodiment of the present invention. This configuration includes an elastic holder 10 disposed inside a case 50 of an electronic circuit device for accommodating a circuit part 1. This elastic holder 10 is an insulative, approximate cylinder with a base and a gasket flange 70 extended from its outer peripheral side. A plurality of connecting terminals 20 are integrally formed at intervals of a predetermined distance along the periphery on the bottom face of the elastic holder 10.

Case 50 is composed of, as shown in Fig.38, a lower case 51 and an upper case 52 that covers the opening of the lower case 51, so that these upper and lower cases oppose and mate each other in a detachable manner. These, lower case 51, and upper case 52, are made of a predetermined resin or metal, basically formed to have approximate U-shaped sections, and have endless fitting grooves 54 having an approximately semi-circular section on the respective abutment surfaces of the opposing peripheral walls. Lower case 51 incorporates a circuit board 40 with lands 41, e.g., printed board, high-density flexible substrate, or the like. This circuit board 40 has a number of fine circuit parts (e.g., resistors, capacitors, coils, transformers, diodes, transistors) 42 provided thereon. Upper case 52 has a plurality of passage holes 55, for example, and is formed with a cylindrical fitting rib 53 extended downwards from the interior ceiling thereof.

Examples of circuit part 1 include an electro-acoustic part such as a speaker, etc., a button battery 2 and the like. When a button battery 2, for example, is the circuit part 1, similar to the above embodiments, negative pole 3 is formed in the central portion of the bottom and positive pole 4 is formed over the exterior peripheral portion except that central portion.

Though, in the present embodiment, an electro-acoustic part or the like is mounted and accommodated as circuit part 1, the circuit part should not be limited to these. The invention can be put into use for various types of parts such as electric, electronic, semiconductor, mechanical parts and others.

Elastic holder 10, as shown in Fig.38, is formed in a shape and size corresponding to the circuit part 1, using predetermined rubber material. For example, the holder may be formed in a shape having a hollow that has an approximate convex top section and presenting flexibility and cushioning performance. Circuit part 1 is fitted in a detachable manner from the opening of an upper small-diametric portion 11 and placed into a lower large-diametric portion 12. As the examples of the predetermined rubber material, butadiene rubber, styrene butadiene rubber, urethane rubber, silicone rubber, etc., can be considered. Silicone rubber or the like which is excellent in temperature dependency and insulative performance is most preferred. The hardness of this elastic holder 10 is set within the range of 10 to 90 degrees Hs, preferably, 20 to 70 degrees Hs, more preferably, 40 to 60 degrees Hs, in view of cushioning function, formability, handling and the like.

Gasket flange 70, as shown in the same drawing, is extended horizontally and outwardly in a plane that is approximately perpendicular to the axis of elastic holder 10 (extending vertically in Fig.38), from the outer peripheral side near the boundary between small-diametric portion 11 and large-diametricportion 12 of elasticholder 10, constituting, as a whole, a circular configuration so as to correspond to the sectional shape of the case 50 (see Fig.39). This gasket flange 70 has an enlarged rib 71 having an approximate circular section formed along the peripheral edge, so that this rib 71 is tightly held by the fitting grooves 54 of lower case 51 and upper case 52, whereby the interior space of case 50 is divided into top and bottom.

Though in the present embodiment the gasket flange 70 is formed in a circular shape, this should not limit any structure. For example, the flange may be formed in a rectangular, polygonal, elliptic, racetrack-shaped configuration, or the like.

Each connecting terminal 20 is in an approximate semi-racetrack shape in bottom view and formed of an insulating elastic rubber 21 that is set penetrating through the bottom of elastic holder 10 and integrated therewith with its top and bottom faces projected from the bottom portion of elastic holder 10 and a plurality of fine conductive wires 22 as conductive elements arrayed and embedded in the elastic material, i.e., elastic rubber 21 with their length oriented along the thickness of the elastic holder 10 bottom or in the vertical direction . Elastic rubber 21 is formed of butadiene rubber, styrene butadiene rubber, urethane rubber, silicone rubber, or the like, due to the requirement for being compressively deformable. In particular, silicone rubber or the like, having low hardness and excellent in temperature dependence and insulation, is the most suitable.

The hardness of elastic rubber 21 is set within the range of 10 to 20 degrees Hs, more preferably about 20 degrees Hs, in view of the necessary compressibility and flexibility. This elastic rubber 21 is basically formed to be approximately rectangular in bottom view, with its long side portion (maybe, long side or major axis) extended in the width direction or radial direction of the elastic holder 10 bottom, and the outward end 21b is curved to be approximately semi-circular, in bottom view.

Plural fine conductive wires 22 are arrayed in a row in the center along the longitudinal direction of elastic rubber 21 as shown in Figs.38 and 39, and the upper and lower ends are slightly exposed from the top and bottom surfaces of elastic rubber 21. Each fine conductive wire 22 is formed of a wire or the like having flexibility and flexuosity with its periphery gold plated. This gold plating reduces contact resistance and effectively prevents corrosion at the contact points entailed with changes in environment. These multiple fine conductive wires 22, particularly, their lower ends, come into contact with multiple lands 41 of circuit board 40 while the upper ends contact with negative pole 3 and positive pole 4 of circuit part, respectively so as to establish electrical connection. Each land 41 of circuit board 40 is also plated with gold for the same reason as stated above.

In the present embodiment, conductive elements made up of fine conductive wires 22 are illustrated but the conducive elements should be limited to this: for example, multiple conductive pins, conducive elastomers 23, conducive leaf springs 25, conductive probes 27 or the like may be used.

In the above configuration, when circuit part 1 and circuit board 40 that constitute an electric circuit device are electrically connected, circuit part 1 is fitted into large-diametric portion 12 by spreading the opening of small-diametric portion 11 of elastic holder 10 so that negative pole 3 and positive pole 4 of circuit part 1 come into press contact with multiple fine conductive wires 22 of each connecting terminal 20. In this way, after negative pole 3 and positive pole 4 of circuit part 1 are abutted against connecting terminals 20, small-diametricportion 11 of elastic holder 10 is inserted into fitting rib 53 inside the upper case 52 while rib 71 of gasket flange 70 is fitted to fitting groove 54 of upper case 52. Then, the rib 71 of gasket flange 70 is fitted to fitting groove 54 of lower case 51 while connecting terminals 20 are pressed into contact with lands 41 of circuit board 40. Thus, electrical connection between circuit part 1 and circuit board 40 is completed.

According to the above configuration, since elastic holder 10 and the gasket are integrated, it is possible to reduce the number of parts of the electronic circuit device, hence remarkably simplify management of the parts. Further, since the assembly performance markedly improves, it is possible to expect, to a large degree, smooth, quick, simple and easy assembly. Besides, even if dust, dirt, water and others may infiltrate into the case through passage holes 55 of upper case 52, as indicated by the arrows in Fig.38, no dust, dirt, water or the like will reach the circuit board 40 located at the bottom because gasket flange 70 divides the interior space of case 50 sealing off the lower space from the upper. Accordingly, there is no fear of circuit part 1 being broken down or short-circuited.

Further, since use of rib 71 of gasket flange 70 facilitates positioning and fitting, it is possible to further improve the assembly performance of lower case 51 and upper case 52. Moreover, since elastic holder 10 provides the cushioning function, it is possible to reduce or prevent transfer of vibration and impacts to circuit part 1 in an effective manner even if the electronic circuit device is dropped.

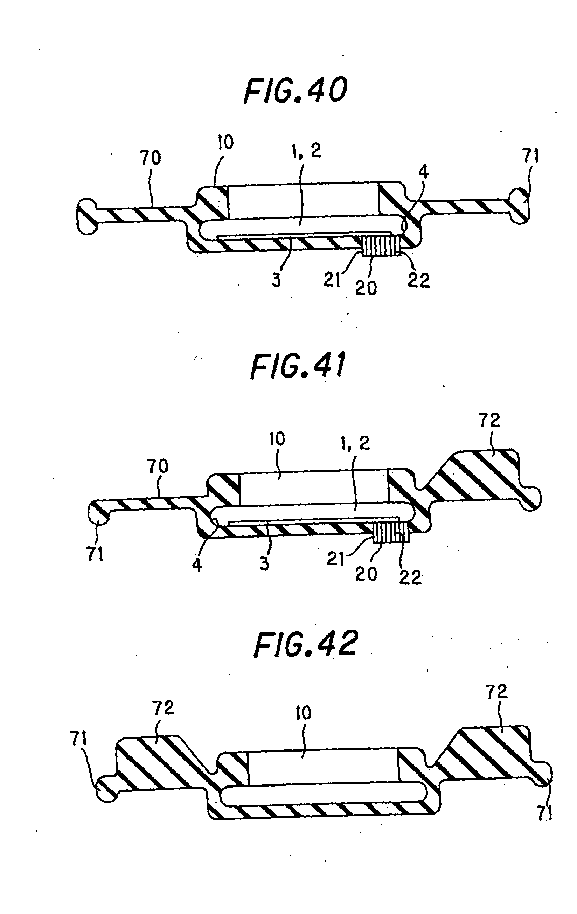

Next, Fig.40 shows the thirteenth embodiment of the present invention. In this case, the twelfth embodiment is modified so that a button battery 2 as a circuit part 1 is put in an elastic holder 10 having a lower height while a rib 71 of a gasket flange 70 is formed so as to have an approximately racetrack-shaped section and a single connecting terminal 20 is integrally formed at the outer periphery on the bottom of elastic holder 10. Othercomponents are same as the above embodiment, so that description is omitted.

Also in this embodiment the same operation and effect as the above embodiment can be expected. In addition, connecting terminals 20 are reduced in number, so it is obvious that the cost can be cut down.

Next, Fig.41 shows the fourteenth embodiment. In this case, the twelfth embodiment is modified so that part of gasket flange 70 is projected to be thicker or higher than the other part, forming a spacer (insert) 72 that comes in contact with the interior surface at one side part of upper case 52 while a rib 71 of a gasket flange 70 is formed so as to have an approximately semi-racetrack-shaped section. Other components are same as the above embodiment, so that description is omitted.

Also in this embodiment the same operation and effect as the above embodiment can be expected. In addition, spacer 72 provides the positioning function and the supporting function when upper case 52 is fitted, mating and assembly of narrow fitting grooves 54 of lower case 51 and upper 52 with rib 71 can be simply done by reference to gasket flange 70 not by reference to upper case 52. Accordingly, it is possible to markedly increase flexibility in assembly and work convenience. It is thus obvious that significant improvement of assembly performance can be expected. Further, since part of the interior space of upper case 52 can be filled with elastic spacer 72, it is possible to enhance the strength, rigidity and durability of case 50 or upper case 52 when case 50 is forced to be thin due to the requirement for lightweight configuration.

Next, Fig.42 shows the fifteenth embodiment of the present invention. In this case, the twelfth embodiment is modified so that a plurality of spacers 72 that come into contact with the interior surface at both side parts of upper case 52 are projectively formed by thickening gasket flange 70 while no connecting terminal 20 is formed. As to spacers 72, a single or plural spacers may be formed on only the rear side of gasket flange 70, or may be formed on both the front and rear sides of gasket flange 70. Other components are same as the above embodiment, so that description is omitted.

Also in this embodiment the same operation and effect as the above embodiment can be expected. In addition, it is obvious that the positioning and supporting function for upper case 52 can be further enhanced while the cost can be cut down by omission of connecting terminal 20 when connecting to circuit part 1 is not needed.

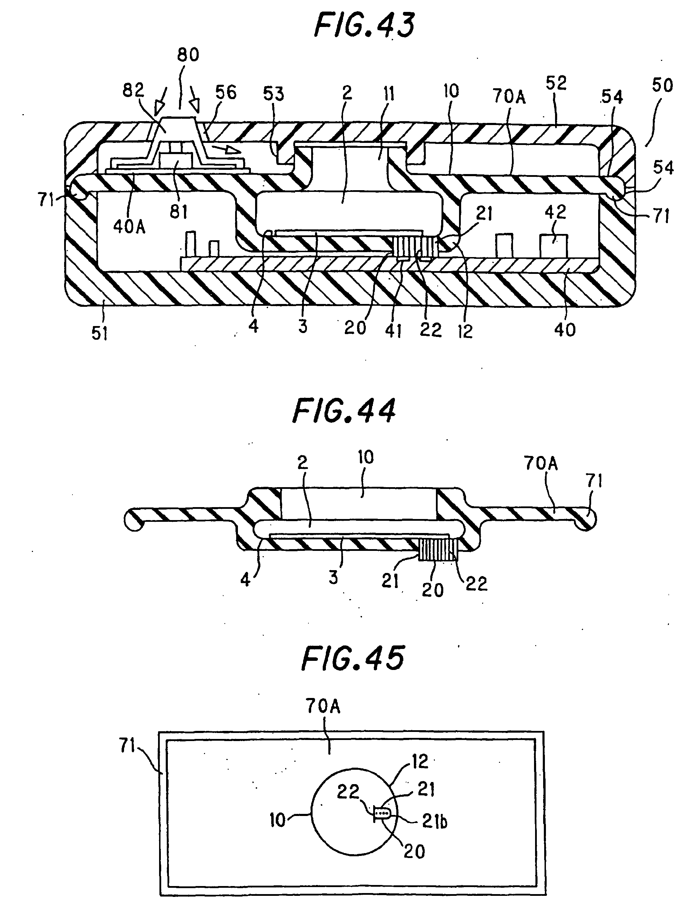

Next, Figs.43 to 45 show the sixteenth embodiment of the present invention. This configuration includes an elastic holder 10 disposed inside a palm-sized case 50 of an automobile keyless entry system transmitter for accommodating a miniature button battery 2. This elastic holder 10 is an insulative, approximate cylinder with a base and a gasket flange 70A extended left and right and front and to the rear from the outer peripheral side of the cylinder. A connecting terminal 20 is integrally formed at the periphery of the bottom of elastic holder 10.

Case 50 is composed of, as shown in Fig.43, opposing lower and upper cases 51 and 52 that mate each other in a detachable manner, forming part of the keyless entry system transmitter. These lower case 51 and upper case 52 are basically configured in the same way as the above twelfth embodiment, except that a switch device 80 is incorporated in upper case 52. This switch device 80 is composed of a tact switch 81 disposed on a circuit board 40A over gasket flange 70A and a film key 82 for push control, covering this tact switch 81 from top. The top part of this flexible film key 82 is exposed through a through-hole 56 of upper case 52 so as to allow for a control operation.

As shown in Figs.2 and 43, button battery 2 may be a coin-type lithium manganese dioxide battery, for example, and formed in a thin disk-like form as in the aforementioned embodiment. This button battery 2 has a circular negative pole 3 in the central part of the bottom face, and a positive pole 4 ranging from the circular outer part of the bottom to the top face including the periphery.

The elastic holder 10 and gasket flange 70A are the same as the above embodiment as shown in Figs.44 and 45, but gasket flange 70A as a whole is formed to be approximately rectangular in plan view so as to correspond to the sectional shape of case 50. This gasket flange 70A has an enlarged rib 71 having an approximate semi-racetrack shaped section formed around the periphery, so that this rib 71 is tightly held by fitting grooves 54 of lower case 51 and upper case 52, whereby the interior space of case 50 is divided into top and bottom. Connecting terminal 20 is the same as the above embodiment so that description is omitted.

In the above configuration, when electrical connection is to be made between button battery 2 and circuit board 40 in the keyless entry system transmitter, button battery 2 is first fitted into large-diametric portion 12 by spreading the opening of small-diametric portion 11 of elastic holder 10 so that negative pole 3 and positive pole 4 of button battery 2 come into press contact with multiple fine conductive wires 22 of respective connecting terminals 20. In this way, with button battery 2 abutted against respective connecting terminals 20, the small-diametric portion 11 of elastic holder 10 is fitted into fitting rib 53 provided inside upper case 52 having switch device 80 while rib 71 of gasket flange 70A is fitted into the fitting groove 54 of upper case 52. Then, rig 71 of gasket range 70A is fitted into the fitting groove 54 of lower case 51, at the same time connecting terminals 20 are pressed against lands 41 of circuit board 40, whereby it is possible to establish electrical connection between button battery 2 and circuit board 40.

According to the above configuration, since elastic holder 10 and the gasket are integrated, it is possible to reduce the number of parts of the keyless entry system transmitter, hence remarkably simplify management of the parts. Further, since the assembly performance markedly improves, it is possible to greatly expect smooth, quick, simple and easy assembly. Besides, even if dust, dirt, water and others (see the arrows in Fig.43) may infiltrate into the case 50 through the through-holes of upper case 52 when, for example, switch device 80 is pushed down, no dust, dirt, water and others will reach the circuit board 40 located at the bottom because gasket flange 70A divides the interior space of case 50 sealing off the lower space from the upper. Accordingly, there is no fear of minute circuit part 1 being broken down or short-circuited. Further, since use of rib 71 of gasket flange 70A facilitates positioning and fitting, it is possible to further improve the assembly performance of lower case 51 and upper case 52.

Further, since elastic holder 10 provides the vibration absorbing, cushioning and damping functions, it is possible to efficiently prevent transfer of vibration and impacts to circuit board 40, connecting terminals 20, the electrodes of button battery 2 and the like even if the keyless entry system transmitter is dropped from a high point, for example. As a result, there is no possibility of the circuit of circuit board 40, connecting terminals 20 and button battery 2, turning on and off repeatedly, hence it is possible to solve the malfunction problem of the keyless entry system transmitter due to chattering, in a markedly effective manner. Further, since elastic holder 10 and elastic rubber 21 present the sealing function by their deformation and compression upon connection, there is no risk that dust and dirt from the outside of the keyless entry system transmitter would penetrate into and between electrodes etc., causing short-circuit.

Also, since circuit board 40, fine conductive wires 22 and button battery 2 can be electrically connected without fault, by merely pressing the connecting terminals 20 integrated with elastic holder 10 into contact, no soldering work is needed. As a result, it is possible to improve assembly performance, smooth out, speed up, simplify and make easier the processing and manufacturing tasks, to a remarkable degree. Further, since the long side of elastic rubber 21 canbe oriented in the radial direction of elastic holder 10, it is possible to correctly put the fine conductive wires 22 into press contact with negative and positive poles 3 and 4 of button battery 2 by specifying the directivity of the elastic rubber.

Moreover, since the outward end 21b of elastic rubber 21 is curved in an approximately semicircular shape, elastic rubber 21 can be laid out as outward from the bottom center of elastic holder 10 and close to the outer circumference as possible, whereby it is possible to properly place fine conductive wires 22 into press contact with negative and positive poles 3 and 4 of button battery 2, respectively. Further, since fine conductive wire 22 itself is easily available, a marked reduction in manufacturing cost can be expected. Besides, since the boundary part between small-diametric portion 11 and large-diametric portion 12 of elastic holder 10 properly positions and presses button battery 2 in a stable manner, each connecting terminal 20 can be correctly pressed against button battery 2 while button battery 2 can be effectively prevented from rattling.

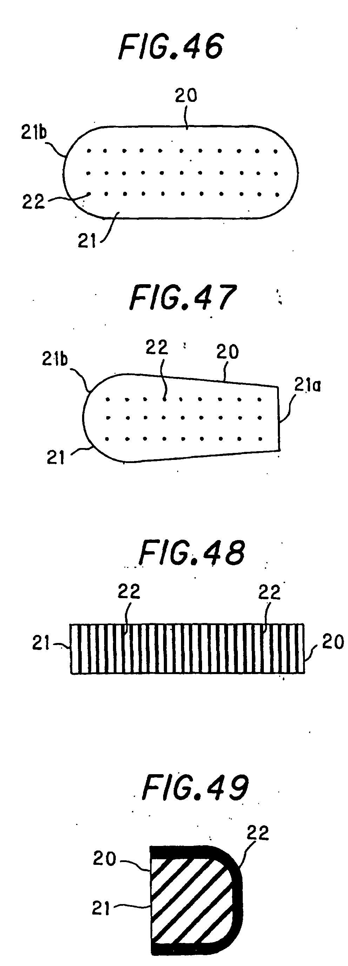

Next, Fig.46 shows the seventeenth embodiment of the present invention. In this case, elastic rubber 21 of each connecting terminal 20 in the sixteenth embodiment is formed in an approximately semi-racetrack shape in plan view, and instead of a row of plural fine conductive wires 22, plural rows of wires are arranged and embedded in elastic rubber 21. Other components are the same as the above embodiment so that description is omitted.

Also in this embodiment, the same operation and effect as that in the above embodiment can be expected. Besides, since a greater number of fine conductive wires 22 are employed, it is obvious that a more positive electrical connection can be established.

Next, Fig.47 shows the eighteenth embodiment of the present invention. In this case, the sixteenth embodiment is modified so that elastic rubber 21 of each connecting terminal 20 is basically formed in an approximately trapezoidal shape, in bottom view, and the inward edge 21a of elastic rubber 21, located close to the bottom center of elastic holder 10 is formed linearly while the wider outward end 21b is curved in a semicircular shape. Other components are the same as the above embodiment so that description is omitted.

Also in this embodiment, the same operation and effect as that in the above embodiment can be expected. Besides, since it is not necessary to form the inward end 21a of elastic rubber 21 in a curve, it is obvious that the process and manufacturing can be made simple.

Next, Figs.48 and 49 show the nineteenth embodiment of the present invention. In this case, the sixteenth embodiment is modified so that each elastic rubber 21 is formed having a rectangular or approximately semi-racetrack shaped section, and a plurality of fine conductive wires 22 in a rounded U-shape or squared U-shape are bonded at intervals of a predetermined distance on part of the surface of the rubber. Other components are the same as the above embodiment so that description is omitted.

Also in this embodiment, the same operation and effect as that in the above embodiment can be expected.

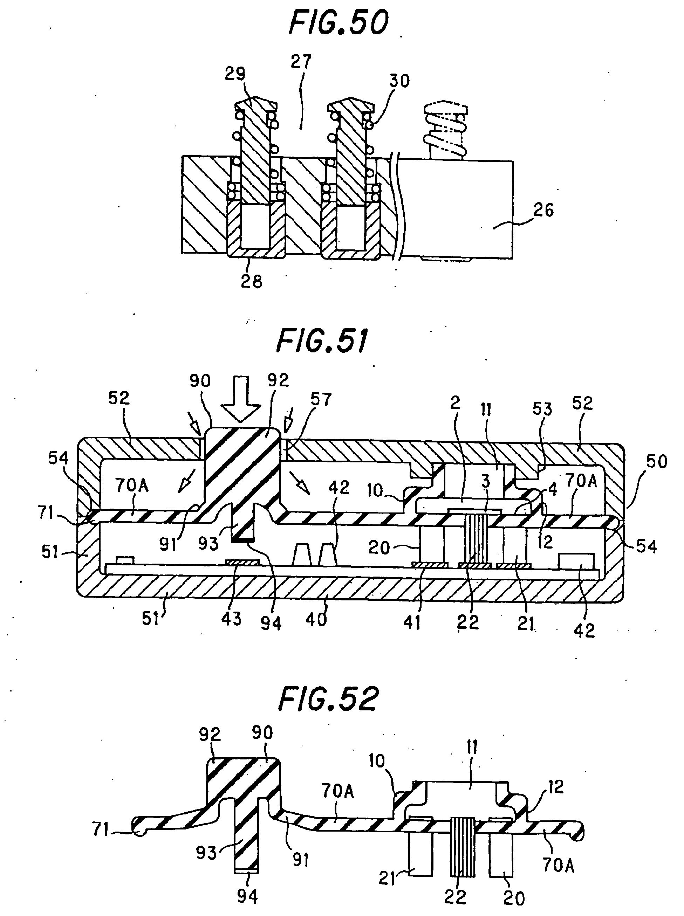

Next, Fig.50 shows the twentieth embodiment of the present invention. In this case, the sixteenth embodiment is modified so that the elastic element is constructed of a housing 26 of insulative multi-purpose engineering plastic, and a plurality of miniature conductive probes 27 that can reciprocate in the direction of the bottom thickness of elastic holder 10 are juxtaposed in the housing 26 at intervals of a predetermined distance.

Each conductive probe 27 as a conductive element is composed of a conductive toe-pin 28 having an approximately U-shaped section, fitted and fixed in a bore of housing 26, a conductive pin 29 which is inserted in the cap-shaped conductive toe-pin 28 from its top opening and supported therein so as to be slidable and a conductive coil spring 30 which is interposed between these conductive toe-pin 28 and conductive pin 29 and urges conductive pin 29 against button battery 2. As to conductive toe-pin 28, it may be fitted and fixed in housing 26 or may be slidably inserted. Other components are the same as the above embodiment so that description is omitted.

Also in this embodiment, the same operation and effect as in the above embodiment can be expected.

Though in the above embodiments, multiple fine conductive wires 22 that are put in contact with negative pole 3 and positive pole 4 of button battery are arrayed all together across the length of elastic rubber 21, the arrangement should not be limited to this. For example, a plurality of fine conductive wires 22 that are put in contact with negative pole 3 of button battery 2 may be arrayed across the length of one elastic rubber 21 while a plurality of fine conducive wires 22 that are put in contact with positive pole 4 of button battery 2 may be arrayed across the length of another elastic rubber 21. Further, some of the above embodiments can be combined appropriately. For the conductive elements, a plurality of conductive pins, conductive elastomers 23, conductive leaf springs 25, and others can be used.

Next, Figs.51 to 54 show the twenty-first embodiment of the present invention. This configuration includes an elastic holder 10 incorporated in a case 50 as a constituent of an automobile keyless entry system transmitter for accommodating a miniature button battery 2. This elastic holder 10 is an insulative, approximate cylinder with a base and a gasket flange 70A extended left and right and front and to the rear from its outer peripheral side of the cylinder. Part of this gasket flange 70A is projectively formed as a rubber click switch 90 while a plurality of connecting terminals 20 are integrally formed at intervals of a predetermined distance along the periphery of the bottom of elastic holder 10.

Case 50 is composed of, as shown in Fig.51, a lower case 51 having a top opening and an upper case 52 that covers the opening of this lower case 51, these are opposed to each other and fitted in a detachable manner, forming a compact palm-sized configuration. The lower case 51 and upper case 52 are basically formed of a predetermined resin or metal so as to have an approximate U-shaped section, and have endless fitting grooves 54 on respective the abutment surfaces of the opposing peripheral walls.

Lower case 51 incorporates a circuit board 40 with lands 41, e.g., printed board, high-density flexible substrate, or the like. This circuit board 40 has a number of fine circuit parts (e.g., resistors, capacitors, coils, transformers, diodes, transistors) 42 and a rubber switch electrode 43, provided thereon. This rubber switch electrode 43 is plated with gold in order to reduce contact resistance and effectively prevent corrosion at the contact points entailed with changes in environment. Further, in upper case 52, a cylindrical fitting rib 53 that is extended downward from the interior ceiling is projectively formed on one side while a control hole 57 for the rubber switch is formed on the other side.

Button battery 2 may be a coin-type lithium manganese dioxide battery, for example, and formed in a thin disk-like form, in the same manner as the above embodiments. This button battery 2 has a circular negative pole 3 in the central part of the bottom face, and a positive pole 4 ranging from the circular outer part of the bottom to the rear face located at the top, including the periphery.

Elastic holder 10, as shown in Figs. 51 and 52, is formed in a shape and size corresponding to the button battery 2, using predetermined rubber material. For example, the holder may be formed in a shape having a hollow that has an approximate convex top section and presenting flexibility and cushioning performance. Button battery 2 is fitted and accommodated in a detachable manner from the opening of an upper small-diametric portion 11 and placed into a lower large-diametric portion 12. As the examples of the predetermined rubber material, butadiene rubber, styrene butadiene rubber, urethane rubber, silicone rubber, etc., can be considered. Silicone rubber or the like which is excellent in temperature dependency and insulative performance is most preferred. The hardness of this elastic holder 10 is set within the range of 10 to 90 degrees Hs, preferably, 20 to 70 degrees Hs, more preferably, 40 to 60 degrees Hs, in view of its cushioning function, formability, handling and the like.

The gasket flange 70A, as shown in Figs.51, 52 and 54, is extended horizontally and outwardly in a plane that is approximately perpendicular to the axis of elastic holder 10 (extending vertically in Fig.51), from the lower outer periphery of large-diametric portion 12 of elastic holder 10, constituting, as a whole, an approximately rectangular configuration so as to correspond to the case 50. This gasket flange 70A has an endless enlargedrib 71 having an approximate circular section or semi-circular section formed along the peripheral edge, so that this rib 71 is tightly held by the fitting grooves 54 of lower case 51 and upper case 52, whereby the interior space of case 50 is divided into top and bottom.

Though in the present embodiment the gasket flange 70A is formed in a rectangular shape, this should not limit any structure. For example, the flange may be formed in a rectangular, polygonal, circular, elliptic, racetrack-shaped or any other configuration so as to correspond to the shape of case 50.

Rubber switch 90 is composed of, as shown in Figs.51, 52 and 54, a key top 92 which can be operated by pushing and is integrally formed with and supported by a flexible and repulsive elastic cup 91 formed on the other side on the surface of gasket flange 70A and a conductive contact 94 of rubber, provided at the distal end of a projected portion 93 that is linearly extended from the underside of rubber key top 92 toward the rear side of gasket flange 70A. This rubber switch 90 has a printed pattern such as a numeral, code or the like, on the top of key top 92. The top part of this key top 92 is exposed from a control hole 57 of upper case 52 while conductive contact 94 opposes, and is kept away with a gap, from, a rubber switch electrode 43 of circuit board 40 located below, so as to be put in and out of contact therewith. As this rubber switch 90 descends by pushing the repulsive key top 92, conductive contact 94 comes into contact with rubber switch electrode 43 so as to pass the predetermined signals to circuit board 40.

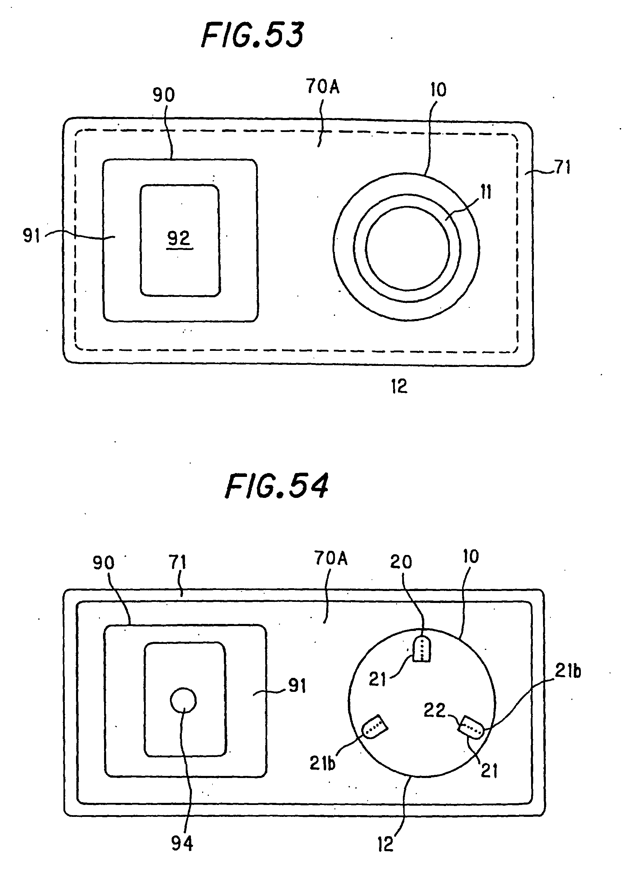

As shown in Figs.52 and 54, each connecting terminal 20 is in an approximate semi-racetrack shape in bottom view and formed of insulating elastic rubbers 21 that are set penetrating through the bottom of elastic holder 10 and integrated therewith with their top and bottom faces projected from the bottom portion of elastic holder 10 and a plurality of fine conductive wires 22 as conductive elements arrayed and embedded in the elastic material, i.e., in the elongated elastic rubbers 21 with their length oriented along the thickness of the elastic holder 10 bottom or in the vertical direction. Elastic rubber 21 is formed of butadiene rubber, styrene butadiene rubber, urethane rubber, silicone rubber, or the like, from the requirement for being compressively deformable. In particular, silicone rubber or the like, having low hardness and being excellent in temperature dependence and insulation, is the most suitable.

The hardness of elastic rubber 21 is set within the range of 10 to 20 degrees Hs, more preferably at about 20 degrees Hs, in view of the necessary compressibility and flexibility. This elastic rubber 21 is basically formed to be approximately rectangular in bottom view, with its long side portion (maybe, long side or major axis) extended in the width direction or radial direction of the elastic holder 10 bottom, and the outward end 21b curved to be approximately semi-circular, in bottom view.

Plural fine conductive wires 22 are arrayed in a row in the center along the longitudinal direction of elastic rubber 21, as shown in Figs.52 and 54, and the upper and lower ends are slightly exposed from the top and bottom surfaces of elastic rubber 21. Each fine conductive wire 22 is formed of a wire or the like having flexibility and flexuosity with its periphery gold plated. This gold plating reduces contact resistance and effectively prevents corrosion at the contact points entailed with changes in environment. These multiple fine conductive wires 22, particularly, their lower ends, come into contact with multiple lands 41 of circuit board 40 while the upper ends contact with negative pole 3 and positive pole 4 of button battery 2 so as to establish electrical connection. Each land 41 of circuit board 40 is also plated with gold for the same reason as stated above.

In the present embodiment, conductive elements made up of fine conductive wires 22 are illustrated but the conductive elements should not be limited to this: for example, a plurality of conductive pins, conductive elastomers 23, conductive leaf springs 25, etc., may be used.

In the above configuration, when button battery 2 and circuit board 40 that constitute an electric circuit device are electrically connected, button battery 2 is fitted into large-diametric portion 12 by spreading first the opening of small-diametric portion 11 of elastic holder 10 so that negative pole 3 and positive pole 4 of button battery 2 come into press contact with multiple fine conductive wires 22 of respective connecting terminals 20. In this way, after button battery 2 is abutted against connecting terminals 20, small-diametric portion 11 of elastic holder 10 is inserted into fitting rib 53 inside the upper case 52 that is oriented downward while key top 92 of rubber switch 90 is fitted into and through control hole 57 of upper case 52 and rib 71 of gasket flange 70A is fitted to fitting groove 54 of upper case 52.

Then, the rib 71 of gasket flange 70A is fitted to fitting groove 54 of lower case 51 and connecting terminals 20 are pressed into contact with lands 41 of circuit board 40 while conductive contact 94 of rubber switch 90 is placed opposing the rubber switch electrode 43 on circuit board 40. Thus, electrical connection between button battery 2 and circuit board 40 is allowed, and switch input is made possible.

According to the above configuration, since elastic holder 10, gasket flange 70A and rubber switch 90 are not separated but are integrated, it is possible to markedly reduce the number of parts of the keyless entry system transmitter, to a large degree and simplify management of the parts, significantly. Further, since the assembly performance markedly improves, it is possible to expect smooth, simple, quick and easy assembly.

In addition, even if dust, dirt, water and others (see the arrows in Fig.51) may infiltrate into the upper interior of case 50 through control hole 57 of upper case 52 when, for example, key top 92 is pushed down, no dust, dirt, water and others will reach the circuit board 40 located at the bottom because gasket flange 70A divides the interior space of case 50 sealing off the lower space from the upper and covers circuit board 40, lands 41, circuit parts 42 and rubber switch electrode 43 from above. Accordingly, there is no fear of minute circuit parts 42 being broken down or short-circuited. It is also possible to markedly effectively prevent disability of switch input due to infiltration of dust, dirt, water and others into the space between key top 92 of rubber switch 90 and rubber switch electrode 43.

Further, since use of rib 71 of gasket flange 70A facilitates positioning and fitting, it is possible to further improve the assembly performance of lower case 51 and upper case 52. Moreover, since elastic holder 10 provides the vibration absorbing, cushioning and damping functions, it is possible to markedly efficiently prevent transfer of vibration and impacts to circuit board 40, button battery 2, connecting terminals 20 and the like even if the keyless entry system transmitter is dropped from a high point. As a result, there is no possibility of the electric circuit of circuit board 40, connecting terminals 20 andbutton battery 2, turning on and off repeatedly, hence it is possible to solve the malfunction problem of the keyless entry system transmitter due to chattering, in a markedly effective manner.

Further, since elastic holder 10 and elastic rubber 21 present the sealing function by their deformation and compression upon connection, there is no risk that dust and dirt from the outside of the keyless entry system transmitter will penetrate into and between electrodes etc., causing short-circuit. Also, since circuit board 40, button battery 2 and fine conductive wires 22 can be electrically connected without fault, by merely making the connecting terminals 20, integrated with elastic holder 10, into press contact, no soldering work is needed. As a result, it is possible to improve assembly performance, smooth out, speed up, simplify and make easier the processing and manufacturing tasks, to a remarkable degree. Further, since elastic rubber 21 can be arranged with its long side oriented in the radial direction of elastic holder 10, it is possible to correctly put the fine conductive wires 22 into press contact with negative and positive poles 3 and 4 of button battery 2 by specifying the directivity of the elastic rubber.

Moreover, since the outward end 21b of elastic rubber 21 is curved in an approximately semicircular shape, elastic rubber 21 can be laid out as outward from the bottom center of elastic holder 10 and close to the outer circumference as possible, whereby it is possible to properly place fine conductive wires 22 into press contact with negative and positive poles 3 and 4 of button battery 2. Further, since fine conductive wire 22 itself is easily available, a marked reduction in manufacturing cost can be expected. Besides, since the boundary part between small-diametric portion 11 and large-diametric portion 12 of elastic holder 10 properly positions and presses button battery 2 in a stable manner, each connecting terminal 20 can be correctly pressed against button battery 2 while button battery 2 can be effectively prevented from rattling. Moreover, use of a click type rubber switch 90 presents a unique clicking feel from the rubber contact.

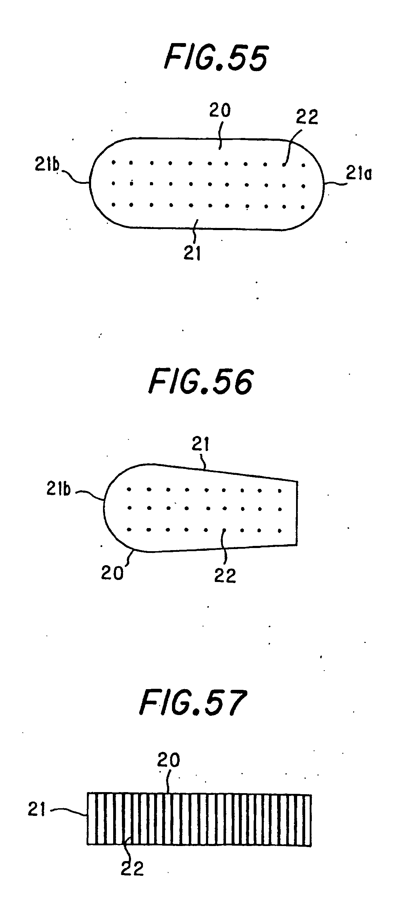

Next, Fig. 55 shows the twenty-second embodiment of the present invention. In this case, the twenty-first embodiment is modified so that, elastic rubber 21 of each connecting terminal 20 is formed in an approximate racetrack-shape and instead of a row of plural fine conductive wires 22, plural rows of wires are arranged and embedded in elastic rubber 21. Other components are the same as the above embodiment .so that description is omitted.

Also in this embodiment, the same operation and effect as that in the above embodiment can be expected. Besides, since a greater number of fine conductive wires 22 are employed, it is obvious that a more positive electrical connection can be established.

Next, Fig.56 shows the twenty-third embodiment of the present invention. In this case, the twenty-first embodiment is modified so that elastic rubber 21 of each connecting terminal 20 is basically formed in an approximately trapezoidal shape, in bottom view, and the inward edge 21a of elastic rubber 21, located close to the bottom center of elastic holder 10 is formed linearly while the wider outward end 21b is curved in a semicircular shape. Other components are the same as the above embodiment so that description is omitted.

Also in this embodiment, the same operation and effect as that in the above embodiment can be expected. Also, since it is not necessary to form the inward end 21a of elastic rubber 21 in a curve, it is obvious that the processing and manufacturing can be simplified.

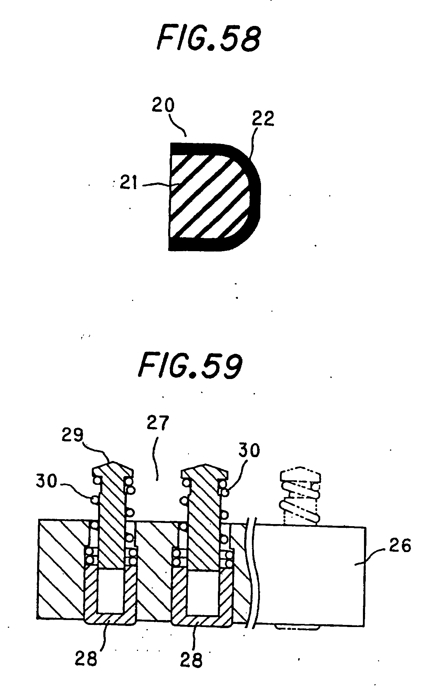

Next, Figs. 57 and 58 show the twenty-fourth embodiment of the present invention. In this case, twenty-first embodiment is modified so that each elastic rubber 21 is formed having an approximately rectangular or approximately semi-racetrack shaped section, and a plurality of fine conductive wires 22 in a rounded U-shape or squared U-shape are arrayed and bonded at intervals of a predetermined distance on part of the surface of the rubber. Other components are the same as the above embodiment so that description is omitted.

Also in this embodiment, the same operation and effect as that in the above embodiment can be expected. In addition, it is obvious that this configuration is effective when the twenty-second or twenty-third embodiment cannot be adopted.

Next, Fig.59 shows the twenty-fifth embodiment of the present invention. In this case, the twenty-first embodiment is modified so that the elastic element is composed of a housing 26 of insulative multi-purpose engineering plastic and a plurality of miniature conductive probes 27 that can reciprocate in the direction of the bottom thickness of elastic holder 10 are juxtaposed in the housing 26 at intervals of a predetermined distance.

Each conductive probe 27 as a conductive element is constructed of a conductive toe-pin 28 having an approximately U-shaped section, fitted and fixed in a bore of housing 26, a conductive pin 29 which is inserted in the cap-shaped conductive toe-pin 28 from its top opening and supported therein so as to be slidable and a conductive coil spring 30 which is interposed between these conductive toe-pin 28 and conductive pin 29 and urges conductive pin 29 against button battery 2. As to conductive toe-pin 28, it maybe fitted and fixed in housing 26 or may be slidably inserted. Other components are the same as the above embodiment so that description is omitted.

Also in this embodiment, the same operation and effect as in the above embodiment can be expected. In addition, it is obvious that this configuration is effective when the twenty-third embodiment cannot be adopted.

Though in the above embodiments, multiple fine conductive wires 22 that are put in contact with negative pole 3 and positive pole 4 of button battery are arrayed all together across the length of elastic rubber 21, the structure should not be limited to this. For example, a plurality of fine conductive wires 22 that are put in contact with negative pole 3 of button battery 2 may be arrayed across the length of one elastic rubber 21 while a plurality of fine conducive wires 22 that are put in contact with positive pole 3 of button battery 2 may be arrayed across the length of another elastic rubber 21. Further, some of the above embodiments can be combined appropriately. Gasket flange 70A may be uniform in thickness overall or may be thicker at least in part than in any other part.

Other than click type rubber switch 90, an overstroke rubber switch or the like which is excellent in key-press durability may be used. Further, as required, a cap made of resin, metal or the like can be attached to the top part of key top 92, by bonding or other methods, a film may be covered on the surface of key top 92, or key top 92 may be formed in a hollow cylinder, prism or other shape. Further, as required, projected portion 93 of rubber switch 90 and each connecting terminal 20 may be made short, or projected portion 93 may be formed in a cylinder, prism or other shape.

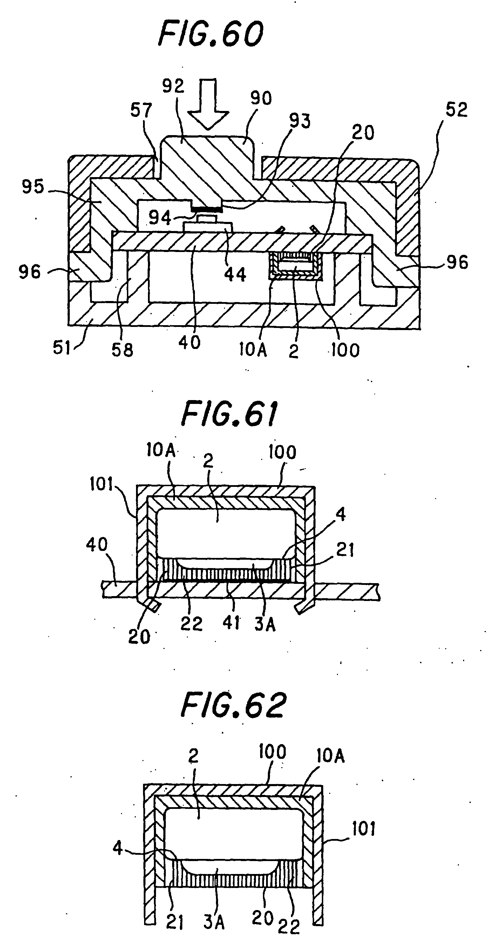

Next, Figs.60 to 63 show the twenty-sixth embodiment of the present invention. This configuration includes: an elastic holder 10A for fitting and accommodating a miniature button battery 2 set for a circuit board 40 such as a printed circuit board or the like of a compact electronic circuit device such as a keyless entry system transmitter; a connecting terminal 20 placed in press contact with the surface electrodes of the button battery held in the elastic holder 10A for supplying power from button battery 2 to the external circuit board 40; and a supporter 100 that positions and fixes button battery 2 to circuit board 40, by being fitted over the bottom side of elastic holder 10A.

As shown in Fig.60, the electronic circuit device includes a lower case 51 and an upper case 52, which oppose and fit each other in a detachable manner. A rubber switch 90 for control and a circuit board 40 are incorporated between the lower case 51 and upper 52. The lower case 51 and upper case 52 are each made of insulative predetermined resin or metal and basically formed so as to have an approximate U- shaped section. Formed on the interior bottom surface of lower case 51 are a plurality of supporting ribs 58 for circuit board 40 at intervals of a predetermined distance. Upper case 52 is formed with one or more control holes 57, as required.

Rubber switch 90 is made of a predetermined rubber material and is basically formed so as to have an approximate plate-like section corresponding to the size of the electronic circuit device with its hardness set within the range of 10 to 90 degrees Hs, preferably, 20 to 70 degrees Hs, more preferably, 40 to 60 degrees Hs, in view of its cushioning function, formability, handling and the like. As the examples of the predetermined rubber material, butadiene rubber, styrene butadiene rubber, urethane rubber, silicone rubber, etc., can be considered. Silicone rubber or the like which is excellent in temperature dependency and insulative performance is most preferred.

As shown in Fig.60, rubber switch 90 has a key top 92 for push control, projected out above the surface through control hole 57 of upper case 52. Formed on the undersurface is a projected portion 93 located under key top 92. A conductive contact 94 of rubber is formed at the distal end face of this projected portion 93. A stepped abutment 95 for fitting and positioning circuit board 40 supported by multiple supporting ribs 58 is protruded out at the periphery of the underside of rubber switch 90. A flange 96 is extended horizontally and outwardly from this stepped abutment 95. This flange 96 is held between lower case 51 and upper case 52 so as to present a gasket function.

In the same manner as the above embodiment, this circuit board 40 has a plurality of fine circuit parts (e.g., resistors, capacitors, coils, transformers, diodes, transistors) 42 and a plurality of through-holes for positioning and fixing the circuit part connector. This circuit board 40 has a conductive contact electrode 44 for rubber switch 90, provided on the surface thereof. This conductive contact electrode 44 is plated with gold in order to reduce contact resistance and effectively prevent corrosion at the contact points entailed with changes in environment. On the other hand, a plurality of lands 41 as electrodes for button battery are formed on the underside of circuit board 40. Each land 41 is also gold plated for the same reason as above.

As shown in Fig.60 to 62, button battery 2 is a coin-type lithium manganese dioxide battery, for example, and formed in a thin disk-like form. This button battery 2 has a circular negative pole 3A projected in the central part on the obverse side and a positive pole 4 ranging from the circular outer part of the obverse side to the rear side, including the periphery.

Here, in this embodiment, the area ranging from the circular outer part of the obverse side of button battery 2 to the rear side, including the periphery is formed to be a positive pole 4, but the structure should not be limited to this. For example, the remaining part other than the center on the obverse side of button battery 2 may be formed to be a positive pole 4.

As shown in the same drawings, elastic holder 10A is formed in a shape and size corresponding to button battery 2, using predetermined rubber material. For example, the holder may be formed to be a hollow cylinder with a base, presenting flexibility and cushioning performance so that button battery 2 can be fitted and accommodated in a detachable manner from the opening side. As the examples of the predetermined rubber material, butadiene rubber, styrene butadiene rubber, urethane rubber, silicone rubber, etc., can be considered. Silicone rubber or the like which is excellent in temperature dependency and insulative performance is most preferred. The hardness of this elastic holder 10A is set within the range of 10 to 90 degrees Hs, preferably, 20 to 70 degrees Hs, more preferably, 40 to 60 degrees Hs, in view of its cushioning function, moldability, handling and the like.

Connecting terminal 20 has a thin disk-like form, in plan view, and is configured of an approximately disk-like elastic rubber 21 in contact with the obverse face, the exposed face of button battery 2 accommodated in elastic holder 10A and a plurality of fine conductive wires 22 arrayed and embedded at intervals of a predetermined distance in the elastic rubber 21 with their length oriented in the vertical direction. Because insulative elastic rubber 21 fitting to the opening side of elastic holder 10A needs to be compression-deformable, it is formed of butadiene rubber, styrene butadiene rubber, urethane rubber, silicone rubber, etc., for example. Particularly, silicone rubber or the like which is low in hardness and excellent in temperature dependency and insulative performance is most preferred. The hardness of this elastic rubber 21 is set within the range of 10 to 40 degrees Hs, preferably at about 30 degrees Hs, in view of the necessary compressibility and flexibility.

Elastic holder 10A and connecting terminal 20 may be integrated by use of the same material or use of adhesives.

As shown in Figs.61 and 62, plural fine conductive wires 22 are arranged densely in XY directions of elastic rubber 21 (in one row, two rows, more rows, etc.) with their upper and lower ends slightly exposed from both the top and bottom surfaces of elastic rubber 21. Each fine conductive wire 22 is formed of, for example, a wire or the like having flexibility and flexuosity with its periphery gold plated. This gold plating reduces contact resistance and effectively prevents corrosion at the contact points entailed with changes in environment. These multiple fine conductive wires 22, particularly, the ends on one side, come into contact with negative pole 3A and positive pole 4 of button battery 2 while the ends on the other side contact with multiple lands 41 of circuit board 40, the electrically joined object so as to establish electrical connection between button battery 2 and circuit board 40.

In the present embodiment, conductive elements made up of fine conductive wires 22 are illustrated but the conductive elements shouldnotbe limitedtothis: forexample, aplurality of conductive pins, conductive elastomers 23, conductive leaf springs 25 or conductive probes 27 that vertically reciprocate can be used as the conductive elements.

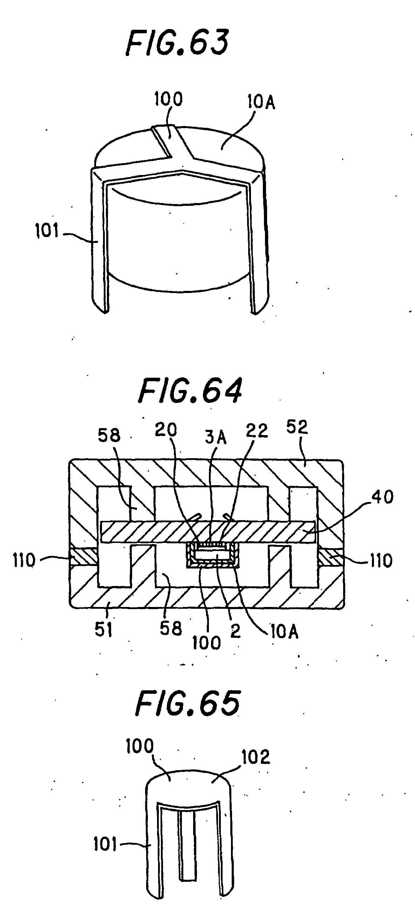

As shown in Fig.63, a supporter 100 is made of a material which provides high enough strength for supporting and fixing button battery 2 and formed so as to embrace elastic holder 10A by being in contact with at least part of the bottom face thereof. The supporter may be integrated with elastic holder 10A with adhesives, etc. For the material, plated aluminum, stainless steel, copper alloy, and the like can be considered. It is also possible to form the supporter by using various resins, specifically, Teflon resin excellent in strength and smoothness, polycarbonate excellent in strength, polyethylene terephthalate, LCP, inexpensive polypropylene, polyethylene, etc.

As shown in Figs.60, 61 and 63, supporter 100 has a plurality of elongated legs 101. Each leg 101 is flexed and extended straight along the periphery of elastic holder 10A from its bottom side to the opening side. The distal free-end of each leg 101 is inserted into the through-hole of circuit board 40 from the underside thereof and bent inwards so as to be fixed.

Here, the number of legs 101 is not particularly limited. Though four, six or any other number of legs may be possible, provision of three legs presenting a Y-shape in plan view is most preferred.

In the above arrangement, setting button battery 2 in circuit board 40 can be performed by spreading first the opening of elastic holder 10A and tightly fitting button battery 2 into it with its obverse face exposed, laying connecting terminal 20 over the negative pole 3A and positive pole 4 of the obverse face of this button battery 2, bringing negative pole 3A and positive pole 4 of button battery 2 into contact with plural lands 41 of circuit board 40, and inserting legs 101 of supporter 100 into respective through-holes of circuit board 40 and then bending them tightly for fixture.

In this way, connecting terminal 20 is compressed in the vertical direction in the drawing so as to establish electrical connection between circuit board 40 and button battery 2, whereby button battery 2 can be set correctly in circuit board 40 and power from button battery 2 can be supplied to the outside.

According to the above configuration, since elastic holder 10A, which provides the vibration absorbing, cushioning and damping functions, holds and protects button battery 2 against vibration and impacts, it is possible to efficiently prevent transfer of vibration and impacts to button battery 2 even if the electronic circuit device is dropped in error from a high point. As a result, there is no possibility of power supply from button battery 2 being turned on and off at intervals, hence no risk of chattering that will cause malfunction of the electronic circuit device. Also, since circuit board 40, button battery 2 and fine conductive wires 22 can be electrically connected without fault, by merely making the connecting terminal 20, integrated with elastic holder 10A into press contact, no soldering work is needed.

Further, since electrical connection of button battery 2 can be established without soldering multiple metallic leaf springs, etc., one by one, to circuit board 40, it is possible to markedly effectively solve the problems such as poor assembly performance, delay, troubles and complexity during the manufacturing process. Also, there is a risk of spoiling the sealing effect of the electronic circuit device if rubber switch 90 and supporter 100 or the like are formed integrally. According to the present invention, however, rubber switch 90 and supporter 100 are provided as separate parts, so that button battery 2 is pressed against circuit board 40 by forcing only supporter 100 to fix. Therefore, the maintenance of sealability of the electronic circuit device can be improved.

Further, since elastic holder 10A and supporter 100 are integrated, it is possible to greatly expect reduction in the number of parts and simplification of the management of the parts. Moreover, since, upon assembly, a flange 96 of rubber switch 90 deforms or becomes compressed so as to present a sealing function, no dust and dirt from the outside will enter the electronic circuit device, which would cause a short-circuit. Still more, since fine conductive wire 22 is easily available, a marked reduction in manufacturing cost can be expected.

Next, Fig.64 shows the twenty-seventh embodiment of the present invention. In this case, rubber switch 90 is omitted while an endless gasket 110 is interposed between a lower case 51 and an upper case 52 for an electronic circuit device. Other components are the same as that in the above embodiment so that description is omitted.

Also in this embodiment, the same operation and effect as in the above embodiment can be expected. Further, the circuit part connector can be used also for various electronic circuit devices that do not need any rubber switch 90.

Next, Fig.65 shows the twenty-eighth embodiment of the present invention. In this case, a supporter 100 is composed of a circular bracer plate 102 that covers the bottom face of an elastic holder 10A and three legs 101 extended from the rim of bracer plate 102 a predetermined distance apart from each other. Each leg 101 is extended along the periphery of elastic holder 10A from its bottom side to the opening side. The distal free-end of each leg 101 is inserted into the through-hole of circuit board 40 from the underside thereof and bent inwards so as to be fixed. Other components are the same as that in the above embodiment so that description is omitted.

Also in this embodiment, the same operation and effect as in the above embodiment can be expected. In addition, since bracer plate 102 has enough area, it is obvious that the pressing force can be stably and appropriately acted on elastic holder 10A.

Here, the number of legs 101 is not particularly limited. Though four, six or any other number of legs may be possible, provision of three legs is most preferred.

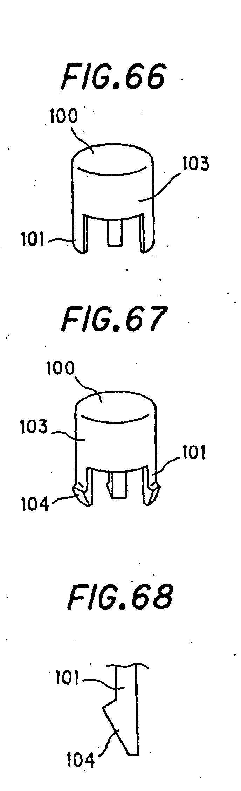

Next, Fig.66 shows the twenty-ninth embodiment of the present invention. In this case, a supporter 100 is composed of a cylinder 103 having a base, which fits on an elastic holder 10A from its bottom side and three legs 101 extended from the rim of the cylinder 103 a predetermined distance apart from each other. Each leg 101 is extended along the periphery of elastic holder 10A from its bottom side to the opening side. The distal free-end of each leg 101 is inserted into the through-hole of circuit board 40 from the underside thereof and bent inwards so as to be fixed. Other components are the same as that in the above embodiment so that description is omitted.

Also in this embodiment, the same operation and effect as in the above embodiment can be expected. In addition, since not only the bottom of elastic holder 10A but also the periphery is protected, it is obvious that elastic holder 10A can be supported more steadily.

Here, the number of legs 101 is not particularly limited. Though four, six or any other number of legs may be possible, but three is the best.

Next, Figs.67 and 68 show the thirtieth embodiment of the present invention. In this case, the twenty-ninth embodiment is modified so that the distal free-end of each leg 101 of supporter 100 is formed with a projected anti-fall engagement claw 104 for engagement with the through-hole. Other components are the same as that in the above embodiment so that description is omitted.

Also in this embodiment, the same operation and effect as that in the above embodiment can be expected. Also, it is possible to markedly efficiently prevent falling and looseness of elastic holder 10A by virtue of engagement claws 104 of these legs 101.

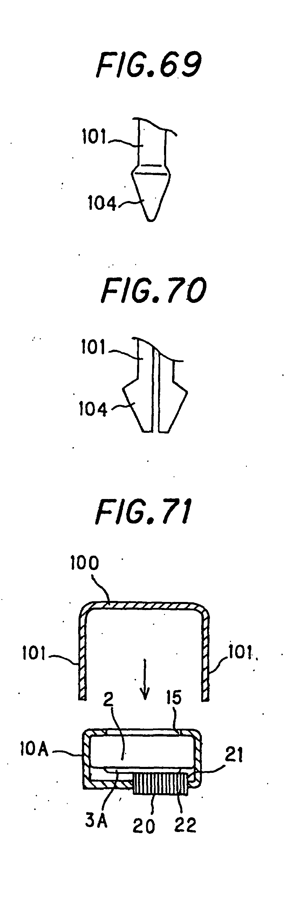

Here, the structure of engagement claw 104 of leg 101 is not limited to that shown in Figs.67 and 68. For example, a roughly tapered spearheaded shape shown in Fig.69 may be formed; each leg 101 may be split into two parts so as to present repulsive performance, where an engagement claw 104 is projectively formed at each distal free-end of the split leg 101 part; or other shapes (e.g., anchor bolt form, rat-teeth-like gimlet form, chrysanthemum gimlet form, screw gimlet form, etc.) may be used. Further, in the above embodiment, negative pole 3A and positive pole 4 of button battery 2 are brought into contact with a single connecting terminal 20, but the structure should be limited to this. A plurality of connecting terminals 20 may be provided so that different connecting terminals come into contact with negative pole 3A and positive pole 4 of button battery 2, respectively. Also, if reduction in the number of parts and simplification of parts management are not particularly demanded, there is no need of intentional integration of elastic holder 10A with supporter 100.

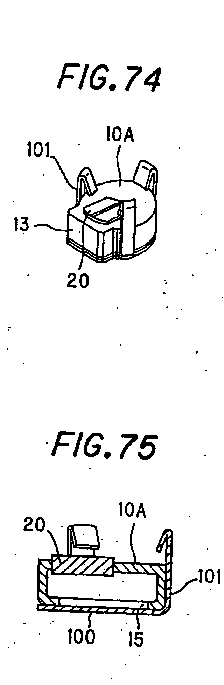

Next, Figs.71 to 75 show the thirty-first embodiment of the present invention. In this case, a button battery 2 is fitted and accommodated into an elastic holder 10A in such a manner that its electrodes, namely, negative pole 3A and positive pole 4, are oriented to the interior bottom side of elastic holder 10A. A connecting terminal 20, which is reduced in size, is integrated with the bottom of elastic holder 10A. Further, a supporter 100 for positioning and fixing button battery 2 to circuit board 40 is fitted on elastic holder 10A from its opening side.

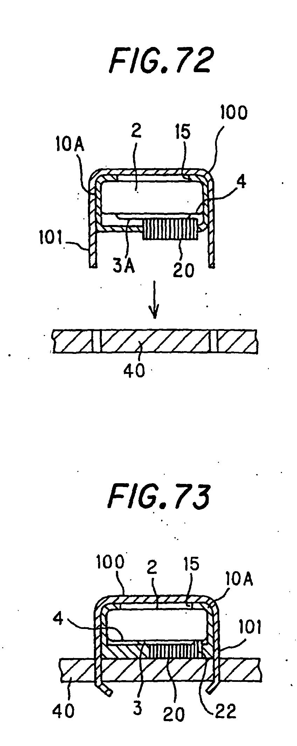

Elastic holder 10A is formed using the aforementioned rubber material in a shape and size corresponding to button battery 2. For example, the holder may be formed in an integral combination of an approximate cylinder with a base, having flexibility and cushioning performance and a rectangular block. An annular flange 15 is projectively formed radially inwards from the inner periphery of the opening face of the holder. Button battery 2 is detachably fitted and accommodated into the holder from the opening side so that its rear outer periphery is held by flange 15 (see Figs.72 to 74). Connecting terminal 20 is composed of, as shown in Figs.71 to 73, a small, approximately oval elastic rubber 21 which is arranged from the bottom center to the outer periphery of elastic holder 10A and integrated with it, and multiple fine conductive wires 22 (conductive elements) arrayed and embedded in elastic rubber 21 at intervals of a predetermined distance with their length vertically oriented.

Multiple fine conductive wires 22 may be arranged in the elastic rubber 21, in the center in its longitudinal direction (in one row, in two rows or in multiple rows), with their top and bottom ends slightly exposed from the obverse and rear sides of elastic rubber 21. Supporter 100 is made of a material which provides high enough strength for supporting and fixing button battery 2 and formed so as to embrace elastic holder 10A by being in partial contact with the opening side of elastic holder 10A. The supporter may be integrated with elastic holder 10A with adhesives, etc. or may be formed to be detachable. This supporter 100 has a plurality of elongated legs 101. Each leg 101 is flexed and extended straight along the periphery of elastic holder 10A from its opening side to the bottom side. The distal free-end of each leg 101 is inserted into the through-hole of circuit board 40 and bent inwards so as to be fixed. Other components are the same as that shown in the above embodiment so that description is omitted.

Also in this embodiment, the same operation and effect as in the above embodiment can be expected. In addition, since it is no longer necessary to fit and lay a separate connecting terminal 20 over the opening face of elastic holder 10A after button battery 2 is inserted, this facilitates markedly simple setting. Accordingly, it is obvious that workability and handling can be expectedly improved.

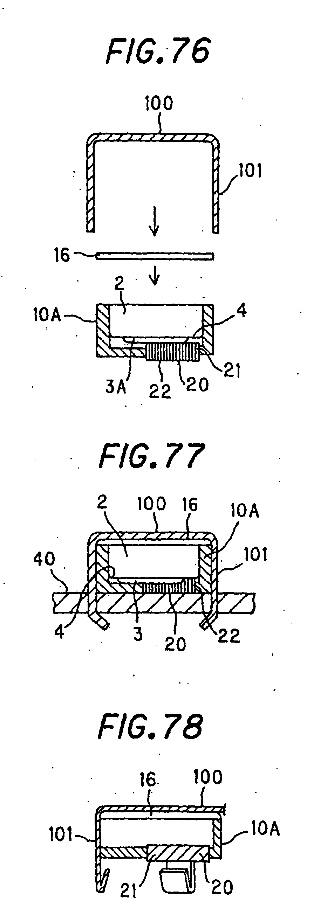

Next, Figs.76 to 78 show the thirty-second embodiment of the present invention. This configuration includes: an elastic holder 10A with no flange 15 for fitting and accommodating a button battery 2, with its electrodes, i.e., negative pole 3A and positive pole 4 oriented to the interior bottom side of elastic holder 10A; a connecting terminal 20 which is reduced in size and is integrated with the bottom of elastic holder 10A; and a supporter 100 for positioning and fixing button battery 2 to a circuit board 40 in such a manner that elastic holder 10A is inserted, with its opening face side first, into the supporter with an insulative sheet 16 interposed therebetween.

Insulative sheet 16 is formed in a thin disk-like form using a predetermined insulative material or the like, so as to confine the opening face of elastic holder 10A. As the examples of the predetermined insulative material for forming this insulative sheet 16, butadiene rubber, styrene butadiene rubber, urethane rubber, silicone rubber, etc., can be considered. Silicone rubber or the like which is excellent in temperature dependency and insulative performance is most preferred. The predetermined insulative material of insulative sheet 16 should not be limited to the above rubber materials. For example, PET, PEI, PP, PS and the like may be used. Other components are the same as that in the above embodiment so that description is omitted.

Also in this embodiment, the same operation and effect as in the above embodiment can be expected. In addition, since flat insulative sheet 16 is interposed between elastic holder 10A and supporter 100, it is obviously possible to markedly effectively prevent supporter 100 from being inclined due to unevenness of insulative sheet 16, hence stabilize the posture, etc., of supporter 100, greatly.

The thirty-first and thirty-second embodiments should be limited to the above mode. For example, thirty-first or thirty-second embodiments may be combined as appropriate with any of twenty-sixth to thirtieth embodiments.

### Industrial Applicability

As has been described, the present invention is effective in reducing the number of parts, making assembly simple and quick, hence improving assembly performance. Further, it is possible to effectively remove the risk of malfunction even if some vibration and impacts act on the device. It is also possible to effectively prevent the parts etc., from being damaged by infiltration of dust, dirt, water and the like.

## Claims

1. A circuit part connector comprising:
an insulative elastic holder in the form of an approximate cylinder with a base for accommodating a circuit part; and
a connecting terminal in contact with the electrodes of the circuit part accommodated in the elastic holder.

2. The circuit part connector according to Claim 1, wherein the connecting terminal is provided at least at the periphery of the bottom, among the bottom center and bottom periphery of the elastic holder.

3. The circuit part connector according to Claim 1 or 2, wherein the connecting terminal is composed of an insulative elastic element provided for the elastic holder and a conductive element which is provided for the elastic element and at least put into contact with the electrode of the circuit part.

4. The circuit part connector according to Claim 3, wherein the elastic element of the connecting terminal is formed in an approximately rectangular or approximately trapezoidal shape, and the long side of the elastic element is oriented in the width direction of the bottom of the elastic holder.

5. The circuit part connector according to Claim 4, wherein, of both the ends of the elastic element, at least the outer end of the elastic element, located on the outer periphery of the bottom of the elastic holder, is formed in an approximately semi-circular shape.

6. The circuit part connector according to Claims 3 to 5, wherein the conductive element of the connecting terminal is a fine conductive wire, conductive pin, conductive elastomer, conductive spring, metal foil, or conductive probe that can reciprocate in the direction of the thickness of the bottom of elastic holder.

7. The circuit part connector according to Claims 1 to 6, wherein a gasket flange is extended from the outer periphery of the elastic holder.

8. The circuit part connector according to Claim 7, wherein part of the gasket flange is shaped into a rubber switch.

9. The circuit part connector according to Claims 8, wherein the rubber switch is composed of a key top formed on the obverse side of the gasket flange and a conductive contact provided at a projected portion extended from the key top to the underside of the gasket flange.

10. The circuit part connector according to any one of Claims 1 to 9, further comprising: a supporter for the elastic holder, which is formed so as to embrace the elastic holder and have a plurality of legs.

11. A connecting structure for circuit part connector, **characterized in that** the electrodes of an electrically joined object and a circuit part are electrically connected by a circuit part connector according to any one of Claims 1 to 6.

12. A connecting structure for circuit part connector, comprising:
first and second cases for incorporating an electrically joined object; and
a circuit part connector according to Claim 7 or 8, interposed between the first and second cases,
**characterized in that** the gasket flange of the circuit part connector is held between the abutment portions of the first and second cases and the electrodes of the electrically joined object and the circuit part are electrically connected by the connecting terminal.

13. A connecting structure for circuit part connector, comprising:
first and second cases for incorporating an electrically joined object; and
a circuit part connector according to Claim 9, interposed between the first and second cases,
**characterized in that** the gasket flange of the circuit part connector is held between the abutment portions of the first and second cases so that the key top of the rubber switch is exposed from the second case so as to allow for a control operation while the conductive contact of the rubber switch and an electrode of the electrically joined object are opposed to each other with a gap so as to be connectable, and the electrodes of the electrically joined object and the circuit part are electrically connected by the connecting terminal.

14. A gasket comprising:
an insulative elastic holder formed in an approximate cylinder with a base; and
a gasket flange extended from the outer periphery of the elastic holder.

15. The gasket according to Claim 14, wherein the peripheral portion of the gasket flange is held between first and second cases for incorporating an electrically joined object so as to divide the interior space into that for the first case and that for the second case.

16. The gasket according to Claim 14 or 15, wherein part of the gasket flange is adapted to serve as a spacer by making the part thicker than the other part.
